# EUROPÄISCHE PATENTSCHRIFT

(11) **EP 3 916 218 B1**
(45) Veröffentlichungstag und Bekanntmachung des Hinweises auf die Patenterteilung: **03.04.2024**
(21) Anmeldenummer: 21173501.4
(22) Anmeldetag: 12.05.2021
(51) Int. Cl.: F03D 1/06

(54) **VERFAHREN ZUM AUSLEGEN UND BETREIBEN EINER WINDENERGIEANLAGE, WINDENERGIEANLAGE SOWIE WINDPARK**
WIND TURBINE AND WIND FARM AND METHOD FOR DESIGNING AND OPERATING A WIND TURBINE
PROCÉDÉ DE CONCEPTION ET DE FONCTIONNEMENT D'UNE ÉOLIENNE, ÉOLIENNE, AINSI QUE PARC ÉOLIEN

(30) Priorität: 15.05.2020 DE 102020113261
(43) Veröffentlichungstag der Anmeldung: 01.12.2021
(73) Patentinhaber: Wobben Properties GmbH, 26607 Aurich (DE)
(72) Erfinder: Messing, Ralf, 26605 Aurich (DE)
(74) Vertreter: Eisenführ Speiser

(56) Entgegenhaltungen:
- EP-A1- 2 944 802
- WO-A1-2007/140771
- DE-A1-102015 008 813
- DE-A1-102018 127 804

## Beschreibung

Die vorliegende Erfindung betrifft ein Verfahren zum Auslegen und Betreiben einer Windenergieanlage zum Erzeugen elektrischer Leistung aus Wind, wobei die Windenergieanlage einen aerodynamischen Rotor mit in ihrem Blattwinkel verstellbaren Rotorblättern aufweist, wobei die Rotorblätter zwischen Rotorblattwurzel und Rotorblattspitze mit mehreren Wirbelgeneratoren belegt werden. Weiterhin betrifft die vorliegende Erfindung ein Rotorblatt eines Rotors einer Windenergieanlage, eine Windenergieanlage sowie einen Windpark.

Um die aerodynamischen Eigenschaften von Rotorblättern zu beeinflussen, ist es bekannt, auf dem Querschnittsprofil der Rotorblätter Wirbelgeneratoren vorzusehen, welche mehrere senkrecht zur Oberfläche verlaufende Verwirbelungselemente umfassen. Die Wirbelgeneratoren, die auch beispielsweise unter dem Begriff Vortex-Generatoren bekannt sind, dienen dazu, über der Oberfläche des Rotortblattes lokale Regionen turbulenter Luftströmungen zu erzeugen, um eine Erhöhung der Resistenz gegen Strömungsablösungen zu bewirken. Hierzu verwirbeln Wirbelgeneratoren die wandnahe Strömung am Rotorblatt, in dessen Folge sich der Impulsaustausch zwischen wandnahen und wandfernen Strömungsschichten stark erhöht und die Strömungsgeschwindigkeiten in der wandnahen Grenzschicht zunehmen.

Die Konfektionierung eines Rotorblattes mit Wirbelgeneratoren erfolgt vor dem Hintergrund einer kostenoptimierten Fertigung in der Regel einheitlich, das heißt es ist für jeden Standort dieselbe Belegung mit Wirbelgeneratoren vorgesehen.

Windenergieanlagen unterliegen je nach Standort unterschiedlichsten Umweltbedingungen, vor allem können sich die Eigenschaften des Windfeldes, dem die Windenergieanlagen im tages- und jahreszeitlichen Wechsel ausgesetzt sind, stark unterscheiden. Das Windfeld ist durch eine Vielzahl von Parametern charakterisiert. Die wichtigsten Windfeldparameter sind mittlere Windgeschwindigkeit, Turbulenz, vertikale und horizontale Scherung, Windrichtungsänderung über der Höhe, Schräganströmung und Luftdichte.

Ferner können Windenergieanlagen je nach Standort unterschiedlichen Rahmenbedingungen unterliegen. Dies können beispielsweise Vorgaben wie ein erlaubter Lärmpegelabstand zu Umgebungsgeräuschen bzw. ein nicht zu überschreitender Schallleistungspegel sein, der im Betrieb durch die Windenergieanlage in einem bestimmten Abstand zur Windenergieanlage erzeugt wird. Beispielsweise gelten Schallleistungspegelanforderungen von 5 bis 6 dB gegenüber Umgebungsgeräuschen im Teillastbetrieb einer Windenergieanlage in Frankreich.

Um den Schallleistungspegel zu reduzieren, werden die Windenergieanlagen in einem schallreduzierten Betriebsmodus regelmäßig mit einer reduzierten Nennrotordrehzahl, d.h. sowohl mit einer reduzierten Teillastdrehzahl, als auch mit einer reduzierten Nennlastdrehzahl, gegenüber dem leistungsoptimierten Betriebsmodus betrieben. Um eine drohende Strömungsablösung insbesondere im Mittelbereich des Rotorblattes zu vermeiden, die sonst zu starken Leistungsverlusten führen würde, wird ab einer definierten Leistung der Blatteinstellwinkel, der üblicherweise auch als Pitchwinkel bezeichnet wird, erhöht.

DE 10 2018 127 804 A1 betrifft ein Verfahren zur Steuerung einer Windenergieanlage. Das Verfahren beinhaltet Messen einer Schallemission mittels zumindest eines am Rotorblatt angebrachten Drucksensors; Erkennen eines charakteristischen aeroakustischen Geräuschs für zumindest einen Strömungsabriss basierend auf der Schallemission; und Steuern oder Regeln von einer oder mehrerer Komponenten der Windenergieanlage basierend auf dem Erkennen des charakteristischen aeroakustischen Geräuschs des Strömungsabrisses.

DE 10 2015 008 813 A1 betrifft ein Verfahren zum Betrieb einer Windenergieanlage mit wenigstens einem Rotorblatt das an einem Rotor montiert ist und wenigstens einem auf einer Rotorblattaußenhaut angeordneten Vortexgenerator, indem der wenigstens eine Vortexgenerator während des Betriebs entlang der Rotorblattaußenhaut verschoben wird.

DE 10 2013 202 881 A1 betrifft ein Verfahren zum Berechnen einer zu fertigenden Hinterkante für ein Rotorblatt eines aerodynamischen Rotors einer Windenergieanlage, wobei das Rotorblatt in Bezug auf den Rotor radiale Positionen aufweist, das Rotorblatt ein lokales, von auf den Rotor bezogenen radialen Positionen abhängiges Blattprofil aufweist und die Hinterkante einen gezackten Verlauf mit mehreren Zacken aufweist, wobei jede Zacke eine Zackenhöhe und eine Zackenbreite aufweist, und die Zackenhöhe und/oder die Zackenbreite abhängig ihrer radialen Position und/oder abhängig vom lokalen Blattprofil ihrer radialen Position berechnet wird.

US 2017/0314530 A1 bezieht sich auf eine Windturbinenblattanordnung mit einem Rotorblatt, das Außenflächen aufweist, die eine Druckseite, eine Saugseite, eine Vorderkante und eine Hinterkante definieren, die sich jeweils zwischen einer Blattspitze und einem Fuß erstrecken. Das Rotorblatt definiert zusätzlich eine Spannweite und eine Sehne. Die Schaufelbaugruppe umfasst außerdem eine Vielzahl von Mikrogrenzschichtenergiequellen, die auf einer Oberfläche der Druckseite der Rotorschaufel angeordnet sind. Die mehreren Mikro-Grenzschichterreger erstrecken sich entweder oberhalb oder unterhalb einer neutralen Ebene des Rotorblatts. Die Mikro-Grenzschichterreger sind so geformt und in Sehnenrichtung positioniert, dass sie die Ablösung einer Grenzschicht bei einem geringen Anstellwinkel verzögern. Zusätzlich wird eine Windkraftanlage mit der Blattanordnung offenbart.

US 2014/0093382 A1 bezieht sich auf ein Windturbinenrotorblatt, das einen Wurzelabschnitt, einen Tragflächenabschnitt, eine verdickte Zone, die sich von einem inneren Nabenende des Blattes nach außen in den Tragflächenabschnitt des Blattes erstreckt, und eine Luftströmungskorrekturanordnung umfasst, die auf einer Druckseite des Blattes über mindestens einem Abschnitt der verdickten Zone angeordnet ist. Die Luftströmungskorrekturanordnung umfasst einen Spoiler, um den Blattauftrieb zu erhöhen, und einen Wirbelgenerator, der zwischen einer Vorderkante und der Hinterkante angeordnet ist und so realisiert ist, dass er eine anliegende Luftströmung zwischen dem Wirbelgenerator und dem Spoiler aufrechterhält. Eine Windkraftanlage mit mindestens einem solchen Rotorblatt wird offenbart. Ferner wird eine Luftströmungskorrekturanordnung zur Korrektur der Luftströmung über die Druckseite eines Windturbinenrotorblattes für einen Bereich des Blattes mit einer verdickten Zone offenbart.

US 2012/0189444 A1 bezieht sich auf ein Windturbinenblatt mit einem oder mehreren turbulenzerzeugenden Streifen, wobei die Streifen auf einer Oberfläche des Blattes angeordnet sind. Das Blatt ist dadurch gekennzeichnet, dass zumindest ein Verbindungsbereich der turbulenzerzeugenden Streifen und der Oberfläche des Blattes vollständig oder teilweise durch Dichtungsmittel abgedeckt sind. Die Erfindung betrifft ferner eine pitchgesteuerte Windturbine mit mindestens zwei pitchgesteuerten Windturbinenblättern und Pitchsteuerungsmitteln zum Pitchen der Blätter. Die pitchgesteuerte Windturbine ist dadurch gekennzeichnet, dass die Flügel einen oder mehrere turbulenzerzeugende Streifen aufweisen, wobei zumindest ein Verbindungsbereich der turbulenzerzeugenden Streifen und eine Oberfläche der Flügel vollständig oder teilweise durch Dichtungsmittel abgedeckt sind.

EP 2 944 802 A1 beschreibt ein Verfahren; mit dessen Hilfe die Festlegung einer Auslegungs-Umgebungsbedingung für ein Windturbinenblatt und die Entwicklung eines Auftriebskoeffizienten und einer entsprechenden optimalen Schnelllaufzahl, welche die jährliche Energieerzeugung der Windenergieanlage bei Betrieb unter der Auslegungs-Umgebungsbedingung maximiert, erfolgt, umfassend die Schritte: Bestimmung einer standortspezifischen Bedingung, die eine Windlastbedingung auf das Blatt im Vergleich zu der Auslegungs-Umgebungsbedingung beschreibt, und Bereitstellung einer Zusatzvorrichtung für das Blatt, die die jährliche Energieproduktion der Windenergieanlage unter der standortspezifischen Bedingung durch Änderung des Auftriebskoeffizienten und der optimalen Schnelllaufzahl des Blattes maximiert. Zu den standortspezifischen Bedingungen können eine reduzierte Drehzahl zur Geräuschminderung und/oder bestimmte mittlere Windgeschwindigkeiten gehören. Die Zusatzeinrichtung kann eine Klappe und/oder Wirbelgeneratoren umfassen.

Vor diesem Hintergrund war es eine Aufgabe der vorliegenden Erfindung, ein Verfahren zum Auslegen und Betreiben einer Windenergieanlage weiterzubilden, welches sich durch einen effizienteren Betrieb der Windenergieanlage auszeichnet, aber auch eine Windenergieanlage anzugeben, die einen effizienteren Betrieb ermöglichen.

Die der Erfindung zugrundeliegende Aufgabe wird gemäß einem Aspekt durch ein Verfahren zum Auslegen und Betreiben einer Windenergieanlage mit den Merkmalen nach Anspruch 1 gelöst. Gemäß dem Anspruch 1 wird ein Verfahren zum Auslegen und Betreiben einer Windenergieanlage zum Erzeugen elektrischer Leistung aus Wind vorgeschlagen, wobei die Windenergieanlage einen aerodynamischen Rotor mit in ihrem Blatteinstellwinkel verstellbaren Rotorblättern aufweist, wobei die Rotorblätter an Radiuspositionen in Längsrichtung zwischen Rotorblattwurzel und Rotorblattspitze mit mehreren Wirbelgeneratoren belegt werden. Die Aufgabe der Verbesserung der Effizienz des Betreibens der Windenergieanlage wird dadurch gelöst, dass eine Radiusposition bis zu der die Belegung der Wirbelgeneratoren in Längsrichtung des jeweiligen Rotorblattes durchgeführt wird, in Abhängigkeit eines einzustellenden Schallleistungspegels an einem Standort der Windenergieanlage bestimmt wird.

Der einzustellende Schallleistungspegel ist derart gewählt, dass die Windenergieanlage Schallleistungspegelanforderungen am Standort der Windenergieanlage genügt. Die Belegung des Rotorblattes bis zu einer in Längsrichtung des jeweiligen Rotorblattes weiter außen liegenden Radiusposition ermöglicht es im Betrieb der Windenergieanlage einen geringeren Blatteinstellwinkel vorzusehen, um Strömungsablösungen zu verhindern. Im Ergebnis kann die Windenergieanlage in einem schallreduzierten Betriebsmodus mit einer gegenüber einem leistungsoptimierten Betriebsmodus reduzierten Nennrotordrehzahl mit einem höheren Leistungskoeffizenten betrieben werden. Dies kann es ermöglichen, den Jahresenergieertrag der Windenergieanlage zu erhöhen. Die Erhöhung des Jahresenergieertrags kann im Bereich von einigen Prozent, beispielsweise 2 % bis 4 % liegen.

Erfindungsgemäß wird somit vorgeschlagen, an einem Standort mit einem geringeren erlaubten Schallleistungspegel eine angepasste Belegung der Wirbelgeneratoren an dem jeweiligen Rotorblatt vorzusehen, um das Auftreten einer Strömungsablösung aufgrund der geringeren Nennrotordrehzahl im schallreduzierten Betriebsmodus gegenüber einer standortunabhängigen Vorkonfektionierung der Belegung eines Rotorblattes mit den Wirbelgeneratoren zu verhindern. Die Wirbelgeneratoren können den maximalen Anstellwinkel, bei dem ein Strömungsabriss auftritt, erhöhen. Eine standortabhängige, d.h. nicht einheitliche, Belegung des Rotorblattes mit Wirbelgeneratoren kann zu erhöhten Erträgen führen, die in Summe die Einsparungen einer standortunabhängigen Belegung produktionsseitig gegebenenfalls deutlich überkompensieren können.

Das Betreiben der Windenergieanlage mit einer geringeren Nennrotordrehzahl führt zu einem geringeren Schallleistungspegel der Windenergieanlage. Eine geringere Nennrotordrehzahl führt jedoch auch zu einem Anstieg des lokalen Anstellwinkels entlang des Rotorblattes. Um den Anstellwinkel zu begrenzen und Strömungsablösungen an dem Rotorblatt zu vermeiden, wird der Blatteinstellwinkel angepasst. Das Anpassen des Blatteinstellwinkels, insbesondere das Einstellen größerer Blatteinstellwinkel, kann zu signifikanten Ertragsverlusten führen. Entscheidend für die Einstellung des Blatteinstellwinkels sind typischerweise die Anstellwinkel am Übergang zwischen einem Bereich des Rotorblattes mit Wirbelgeneratoren und einem Bereich des Rotorblattes ohne Wirbelgeneratoren. In vielen Fällen ist eine Gefahr der Strömungablösung in den der Nabe zugewandten Bereichen größer als im Außenblatt und im Außenblatt liegt Ertragspotenzial vor. Eine Verlängerung der Belegung mit Wirbelgeneratoren zur Blattspitze hin unter gleichzeitiger Anpassung der Blatteinstellwinkelführung, insbesondere Verringern des Blatteinstellwinkels, kann den Jahresenergieertrag (engl. annual energy production, AEP) erhöhen.

Bevorzugt wird im Verfahren zusätzlich der Blatteinstellwinkel der Rotorblätter mit dem die Windenergieanlage betrieben wird in Abhängigkeit des einzustellenden Schallleistungspegels am Standort der Windenergieanlage bestimmt. Das Verfahren kann vorsehen, dass sowohl der Blatteinstellwinkel der Rotorblätter mit dem die Windenergieanlage betrieben wird, als auch die Radiusposition bis zu der die Belegung der Wirbelgeneratoren in Längsrichtung des jeweiligen Rotorblattes durchgeführt wird, in Abhängigkeit des einzustellenden Schallleistungspegels am Standort der Windenergieanlage bestimmt werden. Dies kann es ermöglichen, die Belegung des Rotorblattes und das Einstellen des Blatteinstellwinkels aufeinander abzustimmen, um den Jahresenergieertrag unter Einhaltung der Schallleistungspegelanforderungen zu erhöhen.

Die Windenergieanlage kann in einem schallreduziertem Betriebsmodus in Abhängigkeit des einzustellenden Schallleistungspegels am Standort der Windenergieanlage mit einer gegenüber einem leistungsoptimierten Betriebsmodus reduzierten Nennrotordrehzahl betrieben werden. Dies kann eine Erhöhung des Jahresenergieertrags unter Einhaltung der Schallleistungspegelanforderungen ermöglichen.

Ein Verringern des Blatteinstellwinkels kann wiederum zu einem erhöhten Schallleistungspegel führen. Die Nennrotordrehzahl kann derart reduziert werden, dass unter Berücksichtigung des verringerten Blatteinstellwinkels und der Belegung der Rotorblätter mit Wirbelgeneratoren der einzustellende Schallleistungspegel erreicht wird. Die optimale Kombination aus Blatteinstellwinkel und Drehzahl kann hierbei iterativ oder per Optimierungsverfahren unter der Randbedingung des einzustellenden Schallleistungspegels erreicht werden, sich quasi einpendeln.

Das Verfahren kann auch beispielsweise bestimmen, dass für ein bestimmtes Rotorblatt bis zu einem vorbestimmten einzustellenden Schallleistungspegel, keine Wirbelgeneratoren vorteilhaft sind und erst bei unter den vorbestimmten Schallleistungspegel absinkenden einzustellenden Schallleistungspegeln eine Belegung mit Wirbelgeneratoren eingeführt wird.

Die Belegung mit Wirbelgeneratoren kann unmittelbar an der Rotorblattwurzel oder an einer von der Rotorblattwurzel in Längsrichtung beabstandeten Position beginnen. Entscheidend für den erfindungsgemäßen Erfolg ist, dass die Belegung bei der erfindungsgemäß in Abhängigkeit des einzustellenden Schallleistungspegels bestimmten Radiusposition endet. Auch muss keine durchgehende oder konstante Belegung mit Wirbelgeneratoren vorgenommen werden, das heißt, dass auch Unterbrechungen der Belegung möglich sind.

Als "Belegung" ist im Falle passiver Elemente zur Strömungsbeeinflussung als Wirbelgeneratoren, beispielsweise sogenannte Vortex-Generatoren, insbesondere die Anbringung derartiger Elemente an bzw. auf dem Rotorblatt zu verstehen. Im Falle aktiver Elemente zur Strömungsbeeinflussung kann als "Belegung" insbesondere die Aktivierung oder Deaktivierung derartiger Elemente, aber auch deren Anbringung an bzw. auf dem Rotorblatt verstanden werden. Aktive Elemente zur Strömungsbeeinflussung umfassen Schlitze bzw. Öffnungen zum Ansaugen und/oder Ausblasen von Luft, steuerbare Klappen und ähnliches. Es können zum Erzeugen von Turbulenzen beispielsweise auch Wirbelgeneratoren in Form von Plasmageneratoren verwendet werden.

Besonders bevorzugt können Kombinationen aktiver und passiver Elemente zur Strömungsbeeinflussung als Wirbelgeneratoren zum Einsatz kommen. So können in diesem Fall beispielsweise in einem innenliegenden Bereich nahe der Rotorblattwurzel passive Wirbelgeneratoren zum Einsatz kommen, während in einem weiter außen liegenden Bereich aktive Wirbelgeneratoren zum Einsatz kommen. Damit lässt sich die Radiusposition, bis zu der das Rotorblatt mit Wirbelgeneratoren belegt ist, auch im laufenden Betrieb durch die Steuerung der aktiven Elemente zur Strömungsbeeinflussung variieren und insbesondere an die Umweltbedingungen, beispielsweise die Luftdichte oder geänderte Rahmenbedingungen, insbesondere geänderte Schallleistungspegelanforderungen, anpassen. Gleichzeitig wird die Komplexität des Aufbaus im Vergleich mit ausschließlich aktiven Wirbelgeneratoren durch den vergleichsweise geringen Anteil aktiver Wirbelgeneratoren gering gehalten.

Die Luftdichte ist keine Konstante und variiert zeitlich. Vorzugsweise wird als Wert der Luftdichte daher ein Durchschnittswert, beispielsweise ein Jahresdurchschnitt der Luftdichte, oder auch ein Minimum der jährlichen Luftdichte herangezogen. Alternativ oder zusätzlich kann die geografische Höhe des Standortes einfließen, die bekanntermaßen einen Einfluss auf die Luftdichte hat. Vorzugsweise wird die Luftdichte dann aus der geografischen Höhe und beispielsweise einer Durchschnittstemperatur am Standort rechnerisch ermittelt.

Auch Schallleistungspegelanforderungen, die den einzustellenden Schallleistungspegel bestimmen, der nicht überschritten werden darf, können sich über die Zeit an einem Standort ändern. Beispielsweise, können zu verschiedenen Zeiten, unterschiedliche Schallleistungspegelanforderungen gelten, zum Beispiel nachts und tagsüber oder zu bestimmten Ruhezeiten.

Die Radiusposition gibt die Position auf einem Rotorblatt entlang der Rotorblattlängsachse als Radius der jeweiligen Position bezogen auf einen Außenradius des Rotors respektive eine Rotorblattlänge wieder. Die beiden Bezugsgrößen Außenradius und Rotorblattlänge unterscheiden sich um den halben Durchmesser der Rotorblattnabe, der gegebenenfalls herausgerechnet werden muss.

Dadurch kann die betreffende Position auf dem Rotorblatt als Radiusposition mit einem Wert im Bereich von 0 (Null) bis 1 (Eins) angegeben werden. Die Verwendung des Radius zur Beschreibung einer Position entlang des Rotorblatts ist darin begründet, dass Rotorblätter für ihren bestimmungsgemäßen Einsatz zur Montage an einem Rotor einer Windenergieanlage vorgesehen sind. Rotorblätter sind also immer fest einem Rotor zugeordnet, so dass die Verwendung des Radius als Referenzgröße herangezogen wird. Die Radiusposition weist vorzugsweise im Mittelpunkt des Rotors, also in der Rotordrehachse, den Wert 0 (Null) auf. An der Blattspitze, die den am weitesten außenliegenden Punkt des Rotors kennzeichnet, weist die Radiusposition vorzugsweise den Wert 1 (Eins) auf.

Bevorzugt kann die Bestimmung der Radiusposition, an der die Wirbelgeneratoren enden und des Blatteinstellwinkels der Rotorblätter mit denen die Windenergieanlage betrieben wird, in Abhängigkeit des einzustellenden Schallleistungspegels derart erfolgen, dass eine aufgrund der reduzierten Nennrotordrehzahl zu erwartende Strömungsablösung verhindert wird und ein zu erwartender Leistungsverlust minimiert wird. Dies ermöglicht es sicherzustellen, dass keine Strömungsablösung am Rotorblatt auftritt. Hierdurch kann ein Leistungsverlust minimiert werden. Durch die standortspezifische, von dem einzustellenden Schallleistungspegel abhängige Auslegung der Anordnung der Wirbelgeneratoren kann das Auftreten der Strömungsablösung zu signifikant verringerten Blatteinstellwinkeln verschoben werden. Dies ermöglicht es, das Rotorblatt in einem optimierten Anstellwinkelbereich zu betreiben.

Die Belegung der Wirbelgeneratoren kann in Längsrichtung des jeweiligen Rotorblattes bis zu einer Radiusposition durchgeführt werden, die in Abhängigkeit von der reduzierten Nennrotordrehzahl bestimmt wird.

In bevorzugter Weiterbildung kann die Bestimmung der Radiusposition bis zu der die Belegung der Wirbelgeneratoren in Längsrichtung des jeweiligen Rotorblattes durchgeführt wird in Abhängigkeit des einzustellenden Schallleistungspegels derart erfolgen, dass eine bei niedrigerem einzustellenden Schallleistungspegel notwendige Erhöhung des Blatteinstellwinkels, die durch eine notwendige Reduzierung der Nennrotordrehzahl bedingt wird, kompensiert wird. Die Erhöhung des Blatteinstellwinkels bzw. Pitchwinkels kann somit reduziert oder sogar ganz vermieden werden.

Die Bestimmung der Radiusposition, an der die Wirbelgeneratoren enden und des Blatteinstellwinkels der Rotorblätter mit dem die Windenergieanlage betrieben wird, kann in Abhängigkeit des einzustellenden Schallleistungspegels derart erfolgen, dass in einem Hybridbetrieb enthaltend Betriebszeiträume im leistungsoptimierten Betriebsmodus und im schallreduzierten Betriebsmodus, Ertragsverluste im leistungsoptimierten Betriebsmodus durch Ertragsgewinne im schallreduzierten Betriebsmodus über einen bestimmten Zeitraum zumindest kompensiert werden.

Eine Belegung mit Wirbelgeneratoren bis zu einer größeren Radiusposition kann zu Ertragsverlusten im leistungsoptimierten Betriebsmodus führen. Diese können durch Ertragsgewinne im schallreduzierten Betriebsmodus kompensiert oder überkompensiert werden, so dass im Hybridbetrieb insgesamt ein höherer Ertrag, z.B. höherer Jahresenergieertrag, in einem bestimmten Zeitraum erzielt werden kann. Das Verfahren kann somit auch vorsehen, dass die Ertragsverluste im leistungsoptimierten Betriebsmodus durch Ertragsgewinne im schallreduzierten Betriebsmodus über einen bestimmten Zeitraum, beispielsweise ein Jahr, überkompensiert werden, so dass durch Anpassung der Belegung mit Wirbelgeneratoren und des Blatteinstellwinkels der Rotorblätter beispielsweise ein höherer Jahresenergieertrag erzielt wird als ohne eine solche Anpassung. Eine Verringerung des Jahresenergieertrags des leistungsoptimierten Betriebsmodus durch die Belegung des Rotorblattes bis zu einer in Längsrichtung des jeweiligen Rotorblattes weiter außen liegenden Radiusposition ist typischerweise gering im Vergleich zur Erhöhung des Jahresenergieertrags des schallreduzierten Betriebsmodus, so dass insgesamt der Ertragsverlust im leistungsoptimierten Betriebsmodus vom Ertragsgewinn im schallreduzierten Betriebsmodus kompensiert oder überkompensiert werden kann.

Das Verfahren kann beispielsweise einen Hybridbetrieb vorsehen, wenn tagsüber und nachts oder zu bestimmten Ruhezeiten verschiedene Schallleistungspegelanforderungen am Standort der Windenergieanlage gelten. Zum Beispiel kann die Windenergieanlage tagsüber im leistungsoptimierten Betriebsmodus betrieben werden, wenn weniger strenge Schallleistungspegelanforderungen gelten und nachts im schallreduzierten Betriebsmodus, wenn strengere Schallleistungspegelanforderungen gelten.

Im leistungsoptimierten Betriebsmodus wird die Windenergieanlage mit einer leistungsoptimierten Nennrotordrehzahl betrieben, um eine leistungsoptimierte Nennleistung zu erzeugen. Im schallreduzierten Betriebsmodus wird die Windenergieanlage mit einer gegenüber dem leistungsoptimierten Betriebsmodus reduzierten Nennrotordrehzahl betrieben, um die Schallleistungspegelanforderungen zu erfüllen. Der schallreduzierte Betriebsmodus erzeugt eine gegenüber der leistungsoptimierten Nennleistung reduzierte Nennleistung. Der Jahresenergieertrag der Windenergieanlage hängt unter anderem davon ab, für welchen Zeitraum die Windenergieanlage im leistungsoptimierten Betriebsmodus und für welchen Zeitraum die Windenergieanlage im schallreduzierten Betriebsmodus betrieben wird. Im Hybridbetrieb kann die Windenergieanlage auch in weiteren Teillastbetriebsmodi neben dem schallreduzierten Betriebsmodus betrieben werden.

An unterschiedlichen Standorten können unterschiedliche Schallleistungspegelanforderungen bestehen, beispielsweise können Schallleistungspegelanforderungen dahingehend bestehen, dass bereits in einem Teillastbereich oder kurz vor Erreichen der Nennleistung reduzierte Schallleistungspegel eingehalten werden müssen. Dementsprechend ist dann der einzustellende Schallleistungspegel zu wählen, um die Schallleistungspegelanforderungen zu erfüllen.

Vorzugsweise kann die Einstellung des Blatteinstellwinkels in Abhängigkeit von der zur Belegung der Wirbelgeneratoren bestimmten Radiusposition durchgeführt werden. Dadurch kann eine optimale Auslegung sichergestellt sein.

Das Verfahren kann vorsehen, dass ein Parameter in Abhängigkeit von Nennrotordrehzahl, Blatteinstellwinkel der Rotorblätter und Radiusposition bis zu der die Belegung der Wirbelgeneratoren in Längsrichtung des jeweiligen Rotorblattes durchgeführt wird, solange iterative unter der Randbedingung, dass die Windenergieanlage einen Schallleistungspegel emittiert, der unterhalb oder gleich des einzustellenden Schallleistungspegels ist, zueinander optimiert werden, bis eine Randbedingung erfüllt ist. Der Parameter kann beispielsweise ein von der Windenergieanlage in einem bestimmten Zeitraum erzeugter Ertrag sein, zum Beispiel ein Jahresenergieertrag der Windenergieanlage. Die Randbedingung kann beispielsweise ein Erreichen einer maximalen Anzahl an Iterationsschritten sein oder eine Konvergenzbedingung. Die Konvergenzbedingung kann beispielsweise sein, dass der Unterschied von in zwei aufeinanderfolgenden Iterationsschritten ermittelten Jahresenergieeinträgen geringer als ein vorgegebener Grenzwert ist. Dies kann es ermöglichen, die Nennrotordrehzahl, den Blatteinstellwinkel der Rotorblätter und die Radiusposition bis zu der die Belegung der Wirbelgeneratoren in Längsrichtung des jeweiligen Rotorblattes durchgeführt werden so aufeinander abzustimmen, dass ein maximaler Jahresenergieertrag unter Berücksichtigung der Schallleistungspegelanforderungen erzielt wird.

Vorzugsweise kann die Belegung des Rotorblattes mit den Wirbelgeneratoren unter Berücksichtigung einer spezifischen Betriebsführung, insbesondere einer spezifischen Nennleistung, mit der die Windenergieanlage an einem Standort betrieben wird, durchgeführt werden. Hinsichtlich der Betriebsführung ist es vorstellbar, für einen Windanlagentyp standort- und schallleistungspegelabhängige Nennleistungen anzubieten. Hierzu kann eine Anpassung der Nennleistung durch eine Anpassung der Nennrotordrehzahl realisiert werden. Das Betreiben der Windenergieanlagen mit den jeweiligen Nennrotordrehzahlen und Nennleistungen kann von sich ändernden Rahmenbedingungen abhängen.

Beispielsweise kann die Windenergieanlage mit einer reduzierten Nennrotordrehzahl in einem schallreduzierten Betriebsmodus betrieben werden, um Schallleistungspegelanforderungen einzuhalten. Beschränken die Schallleistungspegelanforderungen die Nennrotordrehzahl der Windenergieanlage nicht, so kann die Windenergieanlage mit einer höheren Nennrotordrehzahl im leistungsoptimierten Betrieb betrieben werden. Höhere Nennrotordrehzahlen können, insbesondere in Abhängigkeit des Verhältnisses von Nennrotordrehzahl und Nennleistung, zu höheren Schnelllaufzahlen im Bereich der Nennleistung und somit zu verringerten Anstellwinkeln führen, demzufolge sich die Gefahr einer Strömungsablösung reduziert. Dies führt im Gegenzug dazu, dass die Belegung mit Wirbelgeneratoren in radialer Richtung reduziert werden kann, was zu geringerem Lärm bzw. einem geringeren Schallleistungspegel und zu Leistungssteigerungen führen kann.

Die Schnelllaufzahl ist definiert als Verhältnis einer Geschwindigkeit der Rotorblattspitze bei Nennrotordrehzahl zu Nennwindgeschwindigkeit bei Erreichen der Nennleistung im jeweiligen Betriebsmodus. Die Schnelllaufzahl hängt demnach von dem Verhältnis aus Nennrotordrehzahl und Nennleistung ab. Indem sich die Nennrotordrehzahl und/oder die Nennleistung ändern, kann demnach eine höhere oder niedrigere Schnelllaufzahl resultieren. Es kann vorteilhaft sein, Windkraftanlagen eines Anlagentyps, die mit unterschiedlichen Nennleistungen betrieben werden, unterschiedlich weit in radialer Richtung mit Wirbelgeneratoren zu belegen. Insbesondere im Hybridbetrieb kann die Belegung mit Wirbelgeneratoren davon abhängen wie hoch die jeweiligen Anteile des leistungsoptimierten Betriebsmodus und des schallreduzierten Betriebsmodus an einem Ertragszeitraum der Windenergieanlage sind.

Gemäß einer bevorzugten Weiterbildung können mehrere Blatteinstellkennlinien hinterlegt sein und aus den hinterlegten Blatteinstellkennlinien in Abhängigkeit des für die Belegung der Wirbelgeneratoren bestimmten Rotorposition eine Blatteinstellkennlinie ausgewählt und zum Einstellen des Blatteinstellwinkels verwendet werden.

Die Windenergieanlage kann standortabhängig mit einer Nennrotordrehzahl betrieben werden. Die Bestimmung der Radiusposition bis zu der das jeweilige Rotorblatt mit Wirbelgeneratoren in Längsrichtung des jeweiligen Rotorblattes belegt wird, kann in Abhängigkeit von der Nennrotordrehzahl bestimmt werden.

Vorzugsweise wird die Radiusposition, bis zu der die Belegung der Wirbelgeneratoren in Längsrichtung des jeweiligen Rotorblattes durchgeführt wird, in Abhängigkeit eines Anteils eines schallreduzierten Betriebsmodus an dem Standort der Windenergieanlage bestimmt.

Üblicherweise sind Windenergieanlagen nicht das gesamte Jahr in dem schallreduzierten Betriebsmodus zu betreiben, sondern beispielsweise nur einen bestimmten Anteil, der zwischen 0 und 100 % schwanken kann und für den Standort gut bestimmbar ist. Je nach dem Anteil, in dem die Windenergieanlage in dem schallreduzierten Betriebsmodus zu betreiben ist, ergeben sich unterschiedliche optimale Belegungen mit Wirbelgeneratoren. Damit lässt sich trotz schallreduziertem Betrieb der Jahresenergieertrag (AEP) maximieren.

Hierbei ist zusätzlich möglich, dass unterschiedliche schallreduzierte Betriebsmodi wie stärker beschränkt und weniger stark beschränkt, zum Beispiel auf 98 dB und auf 100 dB beschränkt, kombiniert werden. Die unterschiedlich starken Beschränkungen der schallreduzierten Betriebsmodi können mit unterschiedlichen Wichtungen in die Bestimmung des Anteils des schallreduzierten Betriebsmodus einfließen, wobei weniger starke Beschränkungen ein geringeres Gewicht erhalten.

Vorzugsweise wird zusätzlich eine Betriebsführung der Windenergieanlage, insbesondere eine Einstellung des Blatteinstellwinkels, in Abhängigkeit des Anteils des schallreduzierten Betriebsmodus an dem Standort der Windenergieanlage bestimmt.

Es hat sich gezeigt, dass sowohl die optimale Belegung des Rotorblattes als auch die dazu gehörende, optimierte Betriebsführung abhängig von dem Anteil des schallreduzierten Betriebsmodus den Jahresenergieertrag optimieren kann.

Ein weiterer Aspekt, der nicht beansprucht wird, betrifft ein Rotorblatt mit einer Saugseite und einer Druckseite, wobei zumindest auf der Saugseite zwischen Rotorblattwurzel und Rotorblattspitze mehrere Wirbelgeneratoren angeordnet sind, wobei die Anordnung der Wirbelgeneratoren in Längsrichtung des jeweiligen Rotorblattes bis zu einer Radiusposition in Abhängigkeit von einem standortspezifischen einzustellenden Schallleistungspegel erfolgt. Die Belegung des jeweiligen Rotorblattes mit Wirbelgeneratoren in Abhängigkeit von einem standortspezifischen Schallleistungspegel ermöglicht es, eine Windenergieanlage mit dem Rotorblatt mit einem Schallleistungspegel zu betreiben, der den standortspezifischen Schallleistungspegelanforderungen genügt. Ferner kann die Windenergieanlage mit einem geringeren Blatteinstellwinkel betrieben werden, der eine Strömungsablösung verhindert. Dies kann zu einem höheren Ertrag führen.

Dabei kann die Anordnung der Wirbelgeneratoren ausgehend von der Rotorblattwurzel in Richtung der Rotorblattspitze bis zu einer Radiusposition des Rotorblattes derart erfolgen, dass in einem schallreduzierten Betrieb mit einer gegenüber einem leistungsoptimierten Betrieb reduzierten Nennrotordrehzahl und einer auf die Anordnung der Wirbelgeneratoren angepassten Einstellung eines Blatteinstellwinkels des Rotorblattes, eine aufgrund der reduzierten Nennrotordrehzahl zu erwartende Strömungsablösung verhindert und ein zu erwartender Leistungsverlust minimiert ist.

Es kann also vorteilhaft sein, vorzusehen, dass Rotorblätter von Windenergieanlagen eines Anlagentyps, die unterschiedliche Schallleistungspegelanforderungen erfüllen müssen, auch unterschiedlich weit in radialer Richtung mit Wirbelgeneratoren belegt werden.

Die vorliegende Offenbarung ist besonders vorteilhaft für Rotorblätter, die eine bestimmte Geometrie aufweisen, die als Slender-Blades bezeichnet wird. Slender-Blades oder "schlanke Blätter" haben sich in den letzten Jahren durch den Trend entwickelt, den Rotordurchmesser stark zu vergrößern und gleichzeitig die Profiltiefe zu verkleinern.

Im Kontext der vorliegenden Offenbarung wird ein schlankes Blatt als jedes Blatt bezeichnet, das einen höheren Auslegungsauftriebskoeffizienten oder eine höhere Auslegungs-Schnelllaufzahl, (engl. "tip speed ratio", TSR), im Vergleich zu einer Onshore- oder Offshore-Version der in Jonkman, J. et al. "Definition of a 5-MW Reference Wind Turbine for Offshore System Development", Report, NRELATP-500-38060, 2009 offenbarten Referenzturbinen. Schlanke Blätter werden also aerodynamisch durch eine Erhöhung der Auslegungs-Schnelllaufzahl und/oder eine Erhöhung des Auslegungsauftriebskoeffizienten begünstigt.

Es ist bekannt, dass solche schlanken Blätter in hohem Maße durch die Bereitstellung und Anordnung von Wirbelgeneratoren beeinflusst werden.

Besonders bevorzugt ist eine Rotorblattgeometrie, die in der Nähe der Rotorblattspitze eine geringe aerodynamische Belastung erfährt. Unter einer geringen aerodynamischen Belastung wird insbesondere verstanden, dass eine vorgegebene Lastreserve von beispielsweise 20% oder 30% oder einem anderen geeigneten Wert in Bezug auf eine theoretisch maximale aerodynamische Belastung vorhanden ist. Somit kann die vorhandene aerodynamische Reserve durch die offenbarungsgemäße Anordnung und Bestückung von Wirbelgeneratoren zur Erhöhung der Energieerzeugung genutzt werden.

Bevorzugt wird ein Bereich nahe der Rotorblattspitze als die äußersten 20% der Blattlänge bezeichnet, wobei auch andere Definitionen des Blattspitzenbereichs in Betracht kommen.

Bevorzugt ist es, dass eine axiale Induktionsfaktorverteilung nahe der Rotorblattspitze einen ausreichenden Abstand zur Betz'schen Grenze aufweist, insbesondere ausreichend kleiner als die Betz'sche Grenze ist. Im Rahmen der vorliegenden Offenbarung ist es bevorzugt, dass ein ausreichender Abstand zur Betz'schen Grenze vorliegt, wenn der axiale Induktionsfaktor unter 0,3, vorzugsweise unter 0,2 und besonders bevorzugt im Bereich von 0,1-0,15 liegt, wobei auch andere Grenzen denkbar sind.

In einer bevorzugten Ausführungsform weist das Rotorblatt mit zunehmender radialer Position eine abnehmende aerodynamische Belastung auf. Ein solches Rotorblatt hat sich im Rahmen der vorliegenden Offenbarung als besonders effizient erwiesen.

Weiterhin betrifft die Erfindung in einem dritten Aspekt eine Windenergieanlage umfassend einen aerodynamischen Rotor mit in ihrem Blatteinstellwinkel verstellbaren Rotorblättern, wobei der Rotor mit einer einstellbaren Nennrotordrehzahl betreibbar ist, sowie eine Regelung, dadurch gekennzeichnet, dass die Regelung dazu eingerichtet ist, die Windenergieanlage nach einem Verfahren gemäß dem ersten Aspekt oder einer Ausgestaltung davon zu betreiben.

Bevorzugt kann der Rotor wenigstens ein Rotorblatt nach dem zweiten Aspekt aufweisen.

Die Erfindung wird im Folgenden anhand eines möglichen Ausführungsbeispiels unter Bezugnahme auf die beigefügten Figuren näher beschrieben. Hierbei zeigen:
- Fig. 1: eine Windenergieanlage gemäß der vorliegenden Erfindung;
- Fig. 2: eine schematische Ansicht eines einzelnen Rotorblattes;
- Fig. 3: exemplarisch unterschiedliche Verläufe für eine Anstellwinkelreserve am Rotorblatt über den normierten Rotorradius für zwei unterschiedliche Betriebssituationen;
- Fig. 4: exemplarische Verläufe der Gleitzahl für die unterschiedlichen Betriebssituationen der Windenergieanlage;
- Fig. 5: exemplarische Leistungskurven für unterschiedliche Betriebssituationen;
- Fig. 6: exemplarisch zwei Blatteinstellwinkelkennlinien für zwei unterschiedliche Betriebssituationen;
- Fig. 7: exemplarische Jahresenergieerträge in Abhängigkeit von unterschiedlichen durchschnittlichen Windgeschwindigkeiten;
- Fig. 8: Rotorkennfelder der zwei unterschiedlichen Betriebssituationen, die einen Leistungskoeffizienten in Abhängigkeit des Blatteinstellwinkels und der Schnelllaufzahl darstellen; und
- Fig. 9: exemplarisch Jahresenergieertragsunterschiede in Abhängigkeit der Anteile eines leistungsoptimierten Betriebsmodus und eines schallreduzierten Betriebsmodus für verschiedene Betriebssituationen.

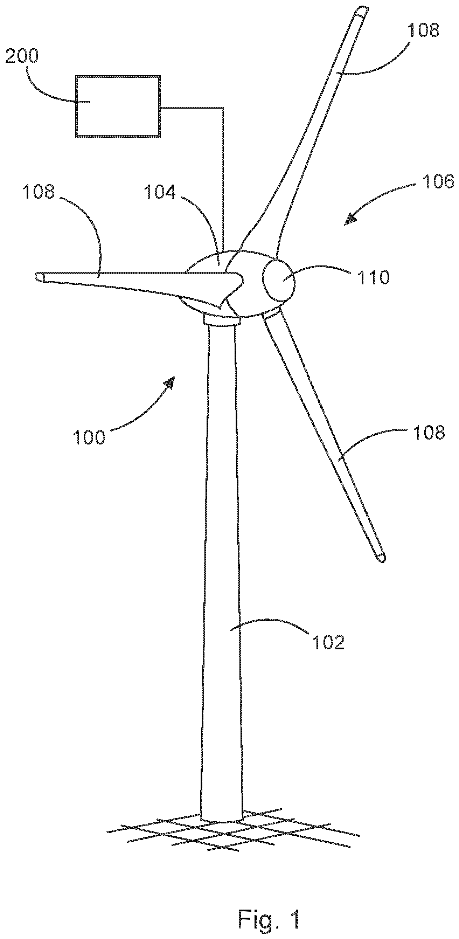

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Fig. 1 eine Windenergieanlage als solche schematisch, so dass eine vorgesehene Anordnung von Wirbelgeneratoren nicht eindeutig erkennbar ist.

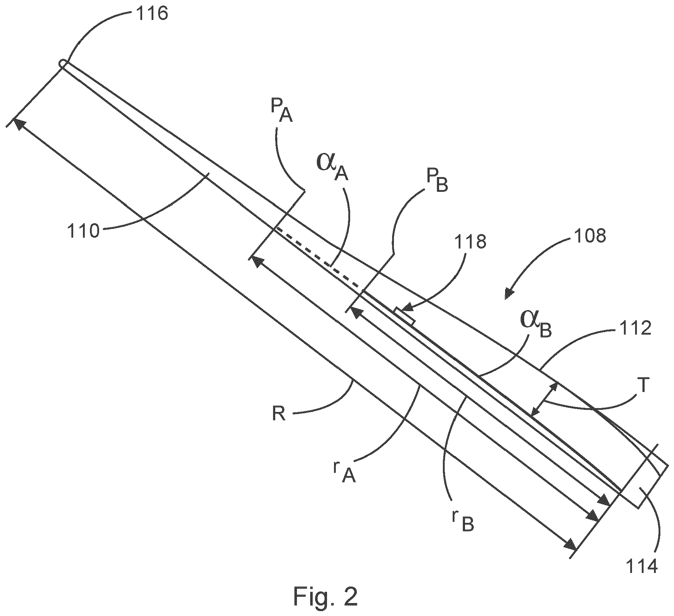

Fig. 1 zeigt eine Windenergieanlage 100 mit einem Turm 102 und einer Gondel 104. An der Gondel 104 ist ein Rotor 106 mit drei Rotorblättern 108 und einem Spinner angeordnet. Der Rotor 106 wird im Betrieb durch den Wind in eine Drehbewegung versetzt und treibt dadurch einen Generator in der Gondel 104 an. Die Rotorblätter 108 sind in ihrem Blattwinkel einstellbar. Die Blatteinstellwinkel γ der Rotorblätter 108 können durch an Rotorblattwurzeln 114 (vgl. Fig. 2) der jeweiligen Rotorblätter 108 angeordnete Pitchmotoren verändert werden. Der Rotor 106 wird mit einer je nach Betriebsmodus einstellbaren Nennrotordrehzahl n betrieben.

Die Windenergieanlage 100 wird in diesem Ausführungsbeispiel von einer Regelung 200, die Teil einer umfassenden Regelung der Windenergieanlage 100 ist, geregelt. Die Regelung 200 wird im Allgemeinen als ein Teil der Regelung der Windenergieanlage 100 implementiert.

Die Windenergieanlage 100 kann mittels der Regelung 200 in einem leistungsoptimierten Betriebsmodus oder einem schallreduzierten Betriebsmodus betrieben werden. Im leistungsoptimierten Betriebsmodus erzeugt die Windenergieanlage 100 die optimale mit der Windenergieanlage 100 erzeugbare Leistung. Im schallreduzierten Betriebsmodus wird die Windenergieanlage 100 mit einer gegenüber dem leistungsoptimierten Betriebsmodus reduzierten Nennrotordrehzahl betrieben, um einen Schallleistungspegel einzustellen, der kleiner oder gleich einem durch Schallleistungspegelanforderungen vorgegebenen Schallleistungspegel ist.

Mehrere dieser Windenergieanlagen 100 können Teil eines Windparks sein. Dabei unterliegen die Windenergieanlagen 100 je nach Standort unterschiedlichsten Umwelt- und Rahmenbedingungen. Vor allem können sich die Schallleistungspegelanforderungen an die Windenergieanlage je nach Standort unterscheiden. Ferner können sich die Eigenschaften des Windfeldes, dem die Windenergieanlagen im tages- und jahreszeitlichen Wechsel ausgesetzt sind, stark unterscheiden. Das Windfeld ist durch eine Vielzahl von Parametern charakterisiert. Die wichtigsten Windfeldparameter sind mittlere Windgeschwindigkeit, Turbulenz, vertikale und horizontale Scherung, Windrichtungsänderung über der Höhe, Schräganströmung und Luftdichte.

Mit Blick auf den einzustellenden Schallleistungspegel sieht eine Maßnahme zum Betreiben einer Windenergieanlage vor, dem durch die im schallreduzierten Betrieb reduzierte Nennrotordrehzahl verursachten Anstieg der Anstellwinkel am Rotorblatt dadurch zu begegnen, dass ab einer gewissen Leistung der Blatteinstellwinkel γ, der auch als Pitchwinkel bezeichnet wird, erhöht wird, um eine drohende Strömungsablösung im Mittelbereich des Rotorblattes 108 zu vermeiden, die zu starken Leistungsverlusten führen würde. Diese Anhebung des Blatteinstellwinkels γ führt dabei zu Leistungsverlusten der Windenergieanlage 100, die jedoch im Allgemeinen geringer ausfallen als die Leistungsverluste, welche die an den jeweiligen Rotorblättern 108 auftretende Strömungsablösung nach sich ziehen würde.

Erfindungsgemäß wird nun vorgeschlagen, eine an einen Standort mit einem geringeren einzustellenden Schallleistungspegel angepasste Auslegung der Belegung von Wirbelgeneratoren 118 auf dem Rotorblatt 108 in Betracht zu ziehen, wie in Fig. 2 beispielhaft dargestellt. Die Wirbelgeneratoren 118, die in Abhängigkeit von der an einem Standort der Windenergieanlage 100 bestimmten einzustellenden Schallleistungspegel über einen erweiterten Bereich im Mittelteil des Rotorblattes 108 angebracht werden, verhindern im Mittelteil die Strömungsablösung und in der Folge ist es möglich, die Anhebung des Blatteinstellwinkels γ zu reduzieren oder einen geringeren Blatteinstellwinkel einzustellen, was in Summe zu einem höheren Ertrag der Windenergieanlage 100 führen kann.

Fig. 2 zeigt eine schematische Ansicht eines einzelnen Rotorblattes 108 mit einer Rotorblattvorderkante 110 sowie einer Rotorblatthinterkante 112. Das Rotorblatt 108 weist eine Rotorblattwurzel 114 und eine Rotorblattspitze 116 auf. Der Abstand zwischen der Rotorblattwurzel 114 und der Rotorblattspitze 116 wird als Außenradius R des Rotorblattes 108 bezeichnet. Der Abstand zwischen Rotorblattvorderkante 110 und Rotorblatthinterkante 112 wird als Profiltiefe T bezeichnet. An der Rotorblattwurzel 114 oder im Allgemeinen in dem Bereich nahe der Rotorblattwurzel 114 weist das Rotorblatt 108 eine große Profiltiefe T auf. An der Rotorspitze 116 ist die Profiltiefe T dagegen sehr viel kleiner. Die Profiltiefe T nimmt, ausgehend von der Rotorblattwurzel 114, in diesem Beispiel nach einem Anstieg im Blattinnenbereich, bis zu einem mittleren Bereich deutlich ab. In dem mittleren Bereich kann eine Trennstelle vorgesehen sein (hier nicht dargestellt). Vom mittleren Bereich bis zur Rotorblattspitze 116 ist die Profiltiefe T nahezu konstant, bzw. die Abnahme der Profiltiefe T ist deutlich verringert.

Die Darstellung in Fig. 2 zeigt die Saugseite des Rotorblattes 108. Auf der Saugseite sind Wirbelgeneratoren 118, die beispielsweise als Vortex-Generatoren ausgeführt sein können, angeordnet. Alternative Ausgestaltungen der Wirbelgeneratoren 118 als aktive oder passive Elemente zur Strömungsbeeinflussung sind denkbar. Während die Wirbelgeneratoren 118 in dem dargestellten Beispiel auf der Saugseite des Rotorblattes 108 angeordnet gezeigt sind, sind alternativ oder auch zusätzlich Wirbelgeneratoren 118 auf der Druckseite des Rotorblattes 108 in erfindungsgemäßer Belegung möglich. Die Belegung der Wirbelgeneratoren 118 kann im Bereich der Rotorblattvorderkante 110 oder auch an einer anderen Position zwischen Rotorblattvorderkante 110 und Rotorblatthinterkante 112 erfolgen. Die Erstreckung der Belegung der Wirbelgeneratoren 118 beginnt im Bereich der Rotorblattwurzel 114 und verläuft in Richtung der Rotorblattspitze 116.

Bezogen auf den Rotor 106 erstrecken sich die Wirbelgeneratoren 118 in radialer Richtung bis zu einer Position P_{A} bzw. P_{B} auf dem Rotorblatt 108. Dabei wird die jeweilige Position P_{A}bzw. P_{B} auf dem Rotorblatt 108 als Radiusposition bezogen auf einen normierten Radius r/R angegeben. Die auf den normierten Radius r/R bezogene Radiusposition gibt die Position auf dem Rotorblatt 108 entlang der Rotorblattlängsachse als Radius rₐ, r_{b} der jeweiligen Position P_{A}, P_{B} bezogen auf den Außenradius R des Rotors 108 respektive die Rotorblattlänge wieder. Dadurch kann die betreffende Position P_{A}bzw. P_{B} auf dem Rotorblatt 108 als Radiusposition r/R mit einem Wert im Bereich von 0 (Null) bis 1 (Eins) angegeben werden.

Um den Jahresenergieertrag der Windenergieanlage 100 zu erhöhen, die das Rotorblatt 108 verwendet, werden die Wirbelgeneratoren 118 in Längsrichtung des Rotorblattes 108 bis zu einer Radiusposition r/R in Abhängigkeit des standortspezifischen einzustellenden Schallleistungspegels angeordnet. Die Anordnung der Wirbelgeneratoren 118 ausgehend von der Rotorblattwurzel 114 in Richtung der Rotorblattspitze 116 bis zu der Radiusposition r/R des Rotorblattes 108 erfolgt derart, dass im schallreduzierten Betriebsmodus mit der gegenüber dem leistungsoptimierten Betriebsmodus reduzierten Nennrotordrehzahl und einer auf die Anordnung der Wirbelgeneratoren 118 angepassten Einstellung des Blatteinstellwinkels γ des Rotorblattes 108, eine aufgrund der reduzierten Nennrotordrehzahl zu erwartende Strömungsablösung verhindert und ein zu erwartender Leistungsverlust minimiert ist.

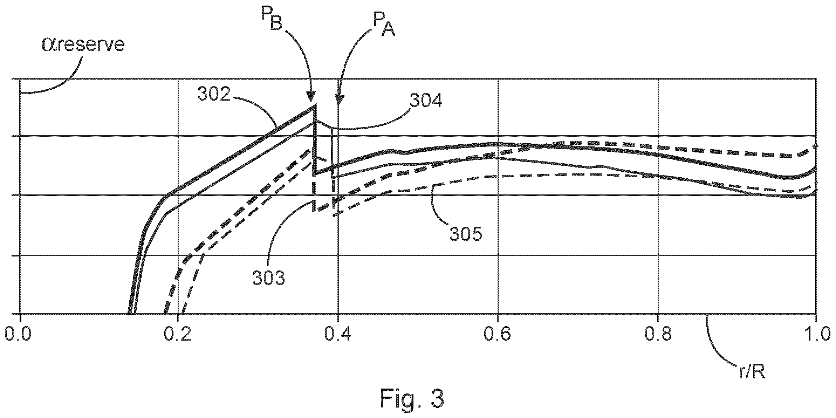

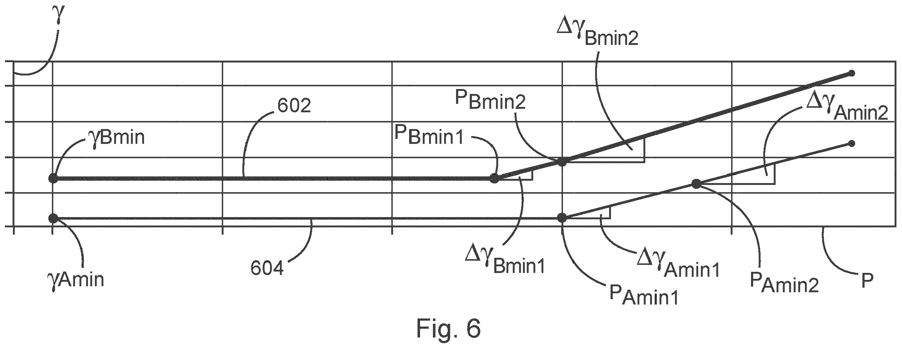

Fig. 3 zeigt für zwei beispielhafte, unterschiedliche Betriebssituationen (Fall A und Fall B), die in der nachstehenden Tabelle aufgelistet sind, beispielhaft unterschiedliche Verläufe 302, 303 (Fall B) und 304, 305 (Fall A) einer Anstellwinkelreserve αᵣₑₛₑᵣᵥₑ am Rotorblatt 108 über die Radiusposition r/R. Die Betriebssituationen Fall A und Fall B unterscheiden sich voneinander hinsichtlich der Radiusposition r_{A}, r_{B} bis zu der das Rotorblatt 108 mit Wirbelgeneratoren 118 belegt ist bzw. der Position P_{A}, P_{B} der Belegung des Rotorblattes 108 mit Wirbelgeneratoren 118 sowie einer für den Betrieb gewählten Blatteinstellwinkelkennlinie 602 (Fall B) und 604 (Fall A) (vgl. Fig. 6).

Der Endpunkt der Belegung mit Wirbelgeneratoren 118 in Längsrichtung des Rotorblattes 108 ist durch einen sprunghaften Abfall der Anstellwinkelreserve in den Graphen der Fig. 3 sichtbar.

Die Anstellwinkelreserve ist abhängig von der Windgeschwindigkeit, die Verläufe 302, 304 sind für eine beispielhafte Windgeschwindigkeit von 6 m/s gezeigt, wohingegen die Verläufe 303, 305 die Verläufe für diejenige Windgeschwindigkeit zeigen, bei der die geringste Anstellwinkelreserve vorliegt. Die Windgeschwindigkeiten, die den Verläufen 303 und 305 zugrunde liegen, müssen nicht und werden in der Praxis mit großer Wahrscheinlichkeit auch nicht identisch sein, da die Anordnung der Wirbelgeneratoren 118 deutlichen Einfluss auf die Windgeschwindigkeitsabhängigkeit der Anstellwinkelreserve hat.

In beiden Fällen A und B unterliegt die Windenergieanlage 100 denselben Schallleistungspegelanforderungen, so dass sowohl in Fall B, als auch im Fall A die Betriebsparameter der Windenergieanlage 100, insbesondere Nennrotordrehzahlen im schallreduzierten Betriebsmodus, Blatteinstellwinkel der Rotorblätter und Radiusposition bis zu der das Rotorblatt 108 mit Wirbelgeneratoren 118 belegt ist, derart gewählt sind, dass sie einen einzustellenden Schallleistungspegel emittiert, der gleich oder kleiner einem Schallleistungspegel gemäß den Schallleistungspegelanforderungen ist.

**Tabelle Betriebssituationen:**

| | |
|---|---|
| Fall B | Wirbelgeneratoren bis r_{B}, Blatteinstellwinkelkennlinie P_{B} |
| Fall A | Wirbelgeneratoren bis r_{A}, Blatteinstellwinkelkennlinie P_{A} |

Im Fall B sind die Wirbelgeneratoren bis zu der Position P_{B} angeordnet und die Windenergieanlage wird mit der Blatteinstellwinkelkennlinie 602 betrieben. Die Kombination aus Belegung mit Wirbelgeneratoren und Blatteinstellwinkel γ ermöglicht es über die gesamte Länge des Rotorblattes eine ausreichende Anstellwinkelreserve zu erhalten und somit Strömungsabrisse zu vermeiden.

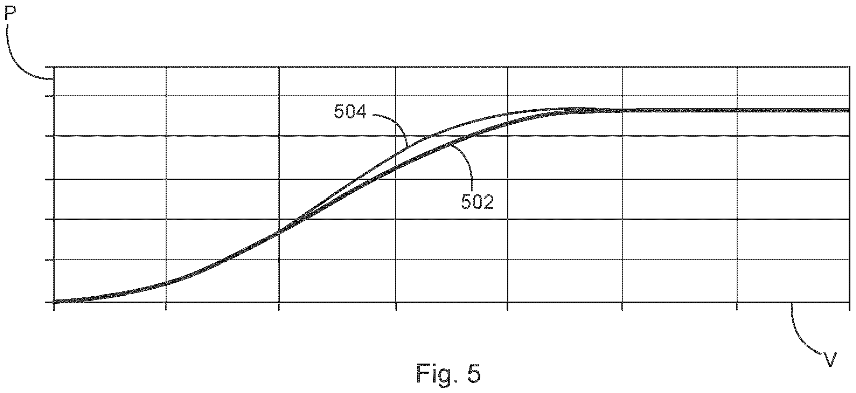

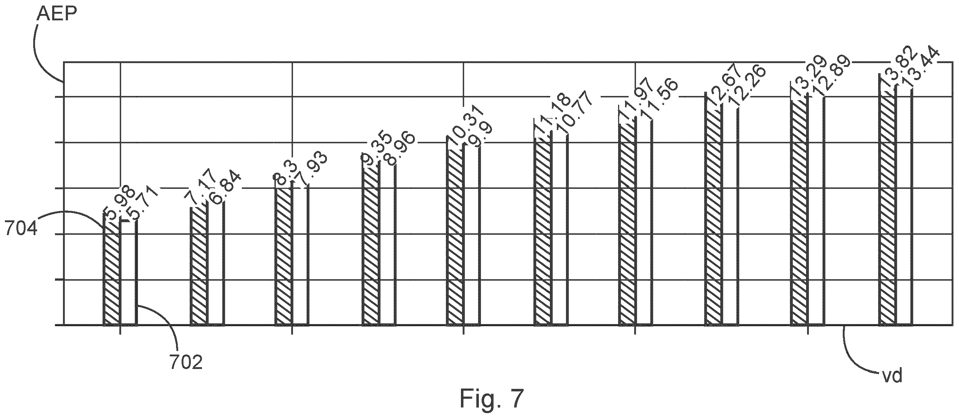

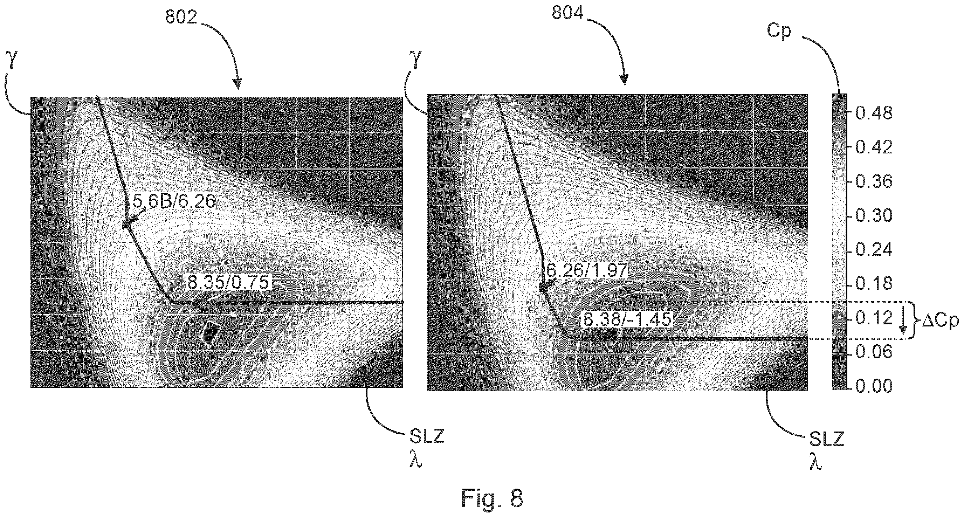

Fall A beschreibt den Fall, wonach durch die Änderung der Position an der die Wirbelgeneratoren enden, nämlich an der Position P_{A} ein sicherer Betrieb mit der bevorzugten Blatteinstellwinkelkennlinie 604 möglich ist, ohne dass Strömungsabrisse auftreten. Die Blatteinstellwinkel γ der Blatteinstellwinkelkennlinie 604 sind im Vergleich mit den Blatteinstellwinkeln γ der Blatteinstellwinkelkennlinie 602 geringer (vgl. Fig. 6). Dies ermöglicht es, eine größere Leistung zu erzeugen (vgl. Fig. 5) und somit insgesamt einen höheren Jahresenergieertrag (vgl. Fig. 7) zu erhalten. Insbesondere, kann die Windenergieanlage in Fall A mit einem höheren Leistungskoeffizienten betrieben werden, als im Fall B (vgl. Fig. 8).

Für den Fall A ist also ein Verfahren zum Auslegen und Betreiben einer Windenergieanlage, beispielsweise der Windenergieanlage 100 aus Fig. 1 mit Rotorblättern 108, die mit Wirbelgeneratoren 118 belegt sind, wie sie in Fig. 2 gezeigt sind, zum Erzeugen elektrischer Leistung aus Wind vorgesehen. Eine Radiusposition r/R bis zu der die Belegung der Wirbelgeneratoren 118 in Längsrichtung des jeweiligen Rotorblattes 108 durchgeführt wird, wird in Abhängigkeit eines einzustellenden Schallleistungspegels an einem Standort der Windenergieanlage 100 bestimmt. Zusätzlich kann der Blatteinstellwinkel γ der Rotorblätter 108 mit dem die Windenergieanlage 100 betrieben wird in Abhängigkeit des einzustellenden Schallleistungspegels am Standort der Windenergieanlage 100 bestimmt werden. Im schallreduzierten Betriebsmodus kann die Windenergieanlage 100 in Abhängigkeit des einzustellenden Schallleistungspegels am Standort der Windenergieanlage 100 mit einer gegenüber dem leistungsoptimierten Betriebsmodus reduzierten Nennrotordrehzahl betrieben werden.

Die Bestimmung der Radiusposition r/R, an der die Wirbelgeneratoren 118 enden und des Blatteinstellwinkels γ der Rotorblätter 108 mit denen die Windenergieanlage 100 betrieben wird kann auch in Abhängigkeit des einzustellenden Schallleistungspegels derart erfolgen, dass eine aufgrund der reduzierten Nennrotordrehzahl zu erwartende Strömungsablösung verhindert und ein zu erwartender Leistungsverlust minimiert wird.

Die Belegung der Wirbelgeneratoren 118 in Längsrichtung des jeweiligen Rotorblattes 108 kann bis zu der Radiusposition r/R durchgeführt werden, die in Abhängigkeit von der reduzierten Nennrotordrehzahl bestimmt wird.

Die Bestimmung der Radiusposition r/R bis zu der die Belegung der Wirbelgeneratoren 118 in Längsrichtung des jeweiligen Rotorblattes 108 durchgeführt wird kann auch in Abhängigkeit des einzustellenden Schallleistungspegels derart erfolgen, dass eine bei niedrigerem einzustellendem Schallleistungspegel notwendige Erhöhung des Blatteinstellwinkels γ, die durch eine notwendige Reduzierung der Nennrotordrehzahl bedingt wird, minimiert wird.

Ferner kann die Bestimmung der Radiusposition r/R, an der die Wirbelgeneratoren 118 enden und des Blatteinstellwinkels γ der Rotorblätter 108 mit dem die Windenergieanlage 100 betrieben wird, in Abhängigkeit des einzustellenden Schallleistungspegels derart erfolgen, dass in einem Hybridbetrieb enthaltend Betriebszeiträume im leistungsoptimierten Betriebsmodus und im schallreduzierten Betriebsmodus, Ertragsverluste im leistungsoptimierten Betriebsmodus durch Ertragsgewinne im schallreduzierten Betriebsmodus über einen bestimmten Zeitraum zumindest kompensiert werden.

Die Einstellung des Blatteinstellwinkels γ kann in Abhängigkeit von der zur Belegung der Wirbelgeneratoren 118 bestimmten Radiusposition r/R durchgeführt werden.

Die Belegung der Rotorblätter 108 mit den Wirbelgeneratoren 118 kann unter Berücksichtigung einer spezifischen Betriebsführung, insbesondere einer spezifischen Nennleistung mit der die Windenergieanlage 100 an einem Standort betrieben wird, durchgeführt werden. Hierbei können die Nennleistungen im Hybridbetrieb berücksichtigt werden oder die reduzierte Nennleistung im schallreduzierten Betriebsmodus.

Mehrere Blatteinstellkennlinien können, beispielsweise in der Regelung 200, hinterlegt sein. Aus den hinterlegten Blatteinstellkennlinien kann in Abhängigkeit der für die Belegung der Wirbelgeneratoren 118 bestimmten Radiusposition r/R eine Blatteinstellkennlinie ausgewählt und zum Einstellen des Blatteinstellwinkels γ verwendet werden.

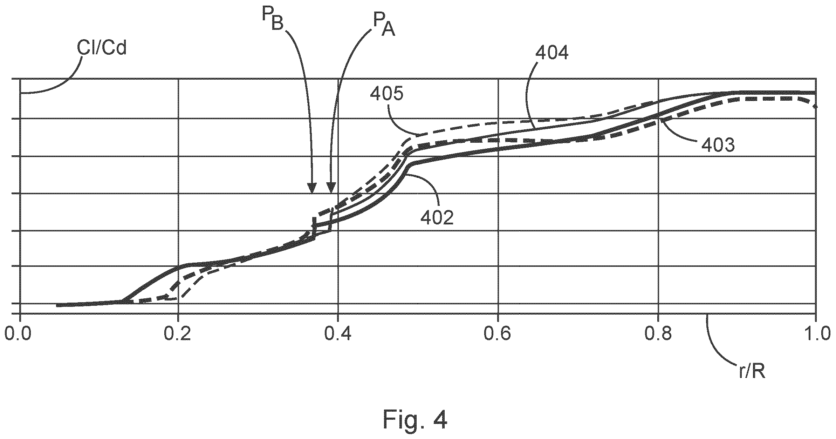

In Fig. 4 sind beispielhafte Verläufe 402, 403 und 404, 405 der Gleitzahl für die zwei unterschiedlichen Betriebssituationen Fall B und Fall A dargestellt. Die Verläufe 402, 403 stellen sich für den Fall B ein. Die Verläufe 404, 405 stellen sich für den Fall A ein, wobei den jeweiligen Verläufen ebenso wie in Fig. 3 unterschiedliche Windgeschwindigkeiten zu Grunde liegen. Die Verläufe 402, 404 sind für eine beispielhafte Windgeschwindigkeit von 6 m/s gezeigt, wohingegen die Verläufe 403, 405 die Verläufe für diejenige Windgeschwindigkeit zeigen, bei der die geringste Anstellwinkelreserve vorliegt.

Für den Fall B erkennt man zunächst, dass die Gleitzahlen gemäß dem Verlauf 402 bis zu einer Radiusposition r/R < 0,37 klein sind und ab dieser Radiusposition r/R mit einem kleinen Sprung ansteigen und nach außen zur Rotorblattspitze 116, zu höheren Radiuspositionen r/R > 0,37 hin, zunehmen. Die niedrigen Werte der Gleitzahlen im Verlauf 402 sind der Belegung mit den Wirbelgeneratoren 118 geschuldet, die im Allgemeinen zu erhöhten Widerstandbeiwerten führen.

Der Verlauf 404 der Gleitzahl im Fall A ähnelt qualitativ im Wesentlichen dem Verlauf 402 bis zu der Radiusposition r/R von etwa 0,37. Die Gleitzahl ist jedoch ab der Radiusposition r/R von etwa 0,39 immer höher als für den Verlauf 402.

Um Strömungsablösung auf dem Rotorblatt 108 zu vermeiden, wird der Blatteinstellwinkel _{Y} erhöht. Es wird also beispielsweise ein für die Belegung mit Wirbelgeneratoren charakteristischer Blatteinstellwinkel γ, das heißt eine Blatteinstellwinkelkennlinie 602 bzw. 604, gewählt. Die Blatteinstellwinkelerhöhung führt am Rotorblatt 108 über den gesamten Rotorradius R zu einer Reduzierung der Anstellwinkel α, sodass sichergestellt ist, dass sich die Anstellwinkel α in einem zulässigen Bereich befinden und es nicht zu einer Strömungsablösung kommt.

Hierbei verläuft der Blatteinstellwinkel vorzugsweise von 0° bis 90° aus einer Rotorebene zu einer als senkrecht zu der Rotorebene angenommenen Windrichtung. Eine Erhöhung des Pitchwinkels oder Blatteinstellwinkels führt also dazu, dass sich die Profilsehne des Rotorblattes zu der Windrichtung hin verdreht. Demnach führt eine Erhöhung des Blatteinstellwinkels zu einer Reduktion der Anstellwinkel.

Diese Vorgehensweise weist jedoch den Nachteil auf, dass durch das Erhöhen der Blatteinstellwinkel γ der Rotorblätter 108, das so genannte Pitchen, die Anstellwinkel α auch im Außenbereich des Rotorblattes 108 abgesenkt werden, d.h. auch dort, wo typischerweise keine Gefahr einer Strömungsablösung besteht. Die Anstellwinkelreduzierung aufgrund des Pitchens kann somit direkt zu Leistungsverlusten der Windenergieanlage 100 führen.

Es wird daher vorgeschlagen, dass die Belegung der Wirbelgeneratoren 118 in Längsrichtung des jeweiligen Rotorblattes 108 bis zu einer Radiusposition r/R durchgeführt wird, die in Abhängigkeit von dem an dem Standort einzustellenden Schallleistungspegel der Windenergieanlage 100 bestimmt wird. Hierdurch kann im Besonderen der beschriebene Nachteil des Leistungsverlustes der Windenergieanlage 100 reduziert werden, der aus dem Pitchen resultiert. Insbesondere kann durch eine Verlängerung der Belegung des Rotorblattes 108 mit Wirbelgeneratoren 118 jeweils ein geringerer Blatteinstellwinkel γ eingestellt werden.

Wie weiter oben bereits ausgeführt, treten die größten Anstellwinkelanstiege beim Betreiben der Windenergieanlage 100 im Mittelteil des Rotorblattes 108 auf. Dies ist insbesondere an Radiuspositionen der Fall, die sich in radialer Richtung an die Position P_{B} bereits angebrachter Wirbelgeneratoren 118 anschließen. Um dem zu begegnen, ist es vorgesehen, bei einem schallreduzierten Betrieb der Windenergieanlage 100 an Standorten mit einem niedrigeren einzustellenden Schallleistungspegel die Belegung der Rotorblätter 108 durch Wirbelgeneratoren 118 über die Position P_{B} hinaus radial bis zu einer Position P_{A} zu verlängern. Dadurch wird der Gefahr von Strömungsablösungen im Mittelteil des Rotorblattes, insbesondere zwischen Position P_{B} und Position P_{A}, begegnet.

Mit der Belegung von Rotorblättern 108 mit Wirbelgeneratoren 118 geht in dem Bereich der Wirbelgeneratoren 118 eine Reduzierung der Gleitzahlen einher, wie weiter oben ausgeführt wurde. Mit Bezug auf die Darstellung in Fig. 4 wird für die Betriebssituation im Fall A die Problematik der Gleitzahlreduzierung durch Belegung mit den Wirbelgeneratoren 118 verdeutlicht. Durch die Verlängerung der Belegung mit Wirbelgeneratoren 118 bis zu einer Radiusposition beispielsweise bei r/R=0,39 in Position P_{A} bleibt die Gleitzahl bis zu dieser Position auf einem niedrigeren Niveau als dies in den Betriebssituation Fall B der Fall ist. Bei geeigneter Auslegung wird jedoch im Außenbereich des Rotorblattes 108, d.h. einer Position mit einer Radiusposition r/R > 0,39, wieder mehr Leistung generiert, was mit sich dann einstellenden Ertragssteigerungen einhergeht.

Diese Ertragssteigerung durch eine zunehmende Leistungsgenerierung im Außenbereich des Rotorblattes 108 ist beispielhaft in Fig. 5 aufgezeigt. Fig. 5 zeigt exemplarisch verschiedene Leistungskurven 502 und 504 für die Betriebssituationen Fall B und Fall A. Die Leistungskurve 502 stellt sich im Fall B ein und die Leistungskurve 504 stellt sich im Fall A ein.

Im Fall A lässt sich gegenüber dem Fall B entsprechend den Leistungskurven 504 und 502 für einen bestimmten Bereich im Teillastbereich der Windgeschwindigkeit v eine höhere Leistungsaufnahme erzielen. Diese erhöhte Leistungsaufnahme im Fall A führt zu den Ertragsgewinnen, durch welche der erhöhte Widerstand im Bereich der zusätzlichen Belegung durch Wirbelgeneratoren 118 über die Position P_{B} hinaus bis zur Position P_{A}, kompensiert bzw. überkompensiert werden kann.

In Fig. 6 sind beispielhaft zwei Blatteinstellwinkelkennlinien 602 und 604 für die zwei unterschiedlichen Betriebssituationen gezeigt. Die Blatteinstellwinkelkennlinie 602 wird der Betriebssituation im Fall B der Regelung des Blatteinstellwinkels γ zugrunde gelegt. Die Blatteinstellwinkelkennlinie 604 wird der Betriebssituation im Fall A der Regelung des Blatteinstellwinkels _{Y} durch die Regelung 200 zugrunde gelegt. Wie aus den Verläufen 602 und 604 zu erkennen ist, ist der Blatteinstellwinkel γ für den Fall A immer geringer als der Blatteinstellwinkel γ für den Fall B. Insbesondere ist der minimale Blatteinstellwinkel γ_{Amin} kleiner als der minimale Blatteinstellwinkel yamin.

Die beispielhaften Blatteinstellwinkelkennlinien 602, 604 sind als abschnittsweise definierte Kennlinien mit in diesem Beispiel drei linearen Abschnitten definiert. Bis zu einem ersten Leistungsschwellwert P_{Amin1} bzw. P_{Bmin1} verbleibt der Blatteinstellwinkel auf dem jeweiligen, für die Blatteinstellwinkelkennlinie 602, 604 gefundenen minimalen Blatteinstellwinkel γ_{Amin} bzw. γ_{Bmin}. Ab diesem ersten Leistungsschwellwert P_{Amin1} bzw. P_{Bmin1} erfolgt ein mit der Leistung linearer Blatteinstellwinkelanstieg Δγ_{Amin1} bzw. Δγ_{Bmin1} bis zum Erreichen eines zweiten Leistungsschwellwertes P_{Amin2} bzw. P_{Bmin2}. Ab diesem zweiten Leistungsschwellwert P_{Amin2} bzw. P_{Bmin2} erfolgt dann ein ebenfalls mit der Leistung linearer Blatteinstellwinkelanstieg Δγ_{Amin2} bzw. Δγ_{Bmin2} bis zum Erreichen der Nennleistung. Der Blattwinkelanstieg Δγ_{A,Bmin2} kann größer, kleiner oder gleich dem Blattwinkelanstieg Δγ_{A,Bmin1} sein.

Es hat sich gezeigt, dass die Blatteinstellwinkelkennlinie zu diesem Zweck besonders erfolgreich durch den minimalen Blatteinstellwinkel γₘᵢₙ, einen Leistungsschwellwert ab dem eine Erhöhung des Blatteinstellwinkels einsetzt und zwei sich daran anschließende lineare Bereiche mit jeweils konstantem Blatteinstellwinkelanstieg definiert werden kann. Natürlich können auch andere Funktionen für den Blatteinstellwinkel, beispielsweise einfachere Funktionen mit lediglich einem einzigen linearen Bereich des Blatteinstellwinkelanstiegs, oder kompliziertere, die beispielsweise nicht lediglich lineare Funktionen erster Ordnung der Leistung sind, herangezogen werden. Der gefundene Ansatz bietet hierbei einen für die Praxis besonders geeigneten Kompromiss zwischen Komplexität sowohl des Optimierungsverfahrens als auch der Umsetzung in die Regelung der Windenergieanlage und gleichzeitig eines möglichst optimalen Energieertrags, also einer möglichst niedrigen Abweichung von einer idealen Blatteinstellwinkelkennlinie.

Ein weiterer Aspekt berücksichtigt, dass bei der Betriebsführung für einen Windenergieanlagentyp standort- und betriebsmodusabhängige Nennleistungen P_{Nenn} angeboten werden. Dabei kann die Anpassung der Nennleistung P_{Nenn} durch eine Anpassung der Nennrotordrehzahl realisiert werden. Höhere Nennrotordrehzahlen führen bei gleicher Leistung zu höheren Schnelllaufzahlen im Bereich der Nennleistung P_{Nenn} und somit zu verringerten Anstellwinkeln α. Demzufolge reduziert sich die Gefahr einer Strömungsablösung. Höhere Nennrotordrehzahlen führen jedoch zu höheren Schallleistungspegeln, so dass bei der Anpassung der Nennrotordrehzahl für den Fall, dass Schallleistungspegelanforderungen am Standort erfüllt werden müssen, die Nennrotordrehzahl entsprechend angepasst werden muss.

Fig. 7 zeigt Jahresenergieerträge AEP dargestellt durch Balken 702 (Fall B) und 704 (Fall A) in Abhängigkeit von unterschiedlichen Durchschnittswindgeschwindigkeiten vd. In Fall A ist der Jahresenergieertrag AEP für alle Durchschnittswindgeschwindigkeiten vd immer höher als im Fall B. Die Kombination aus Belegung des Rotorblattes 108 mit Wirbelgeneratoren 118 bis zur Position P_{A} und Einstellen des Blatteinstellwinkels γ gemäß der Blatteinstellwinkelkennlinie 604 ermöglicht es also im Vergleich mit einer standortunabhängigen Belegung des Rotorblattes 108 mit Wirbelgeneratoren 118 bis zur Position P_{B} und Einstellen des Blatteinstellwinkels γ gemäß der Blatteinstellwinkelkennlinie 602 einen höheren Jahresenergieertrag zu erzielen, wenn Schallleistungspegelanforderungen einzuhalten sind.

Fig. 8 zeigt Rotorkennfelder 802 (Fall B) und 804 (Fall A) des Leistungskoeffizienten in Abhängigkeit des Blatteinstellwinkels γ und der Schnelllaufzahl SLZ. Im Fall A kann die Windenergieanlage 100 mit einem höheren Leistungskoeffizienten Cp betrieben werden. Gegenüber dem Fall B kann ein um ΔCp höherer Leistungskoeffizient erzielt werden.

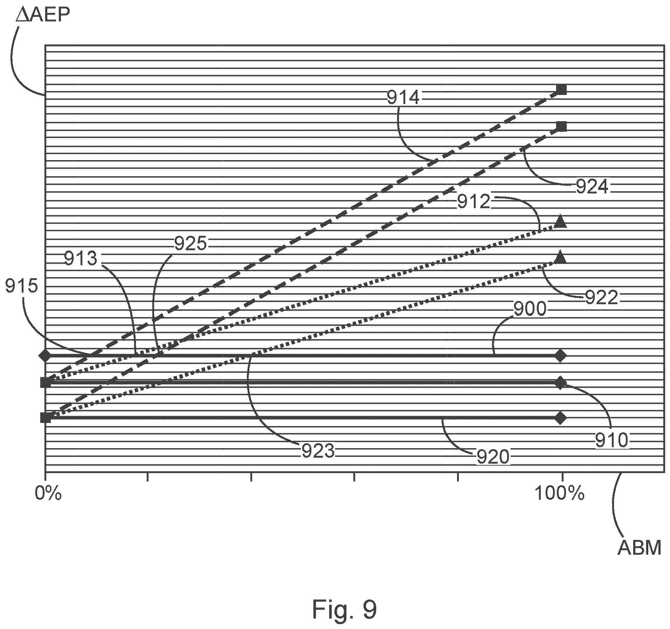

Fig. 9 zeigt exemplarisch Jahresenergieertragsunterschiede ΔAEP in einem Hybridbetrieb einer Windenergieanlage in Abhängigkeit der Anteile ABM eines leistungsoptimierten Betriebsmodus und eines schallreduzierten Betriebsmodus für verschiedene Betriebssituationen. Der Anteil des schallreduzierten Betriebsmodus liegt zwischen 0 % und 100 %.

Als Referenz ist ein Verlauf 900 gezeigt, der den Jahresenergieertrag für eine Windenergieanlage mit bekannter Belegung von Wirbelgeneratoren und bekannter Betriebsführung zeigt. Die weiteren Verläufe 910, 912, 914, 920, 922, 924 zeigen die Jahresenergieertragsunterschiede ΔAEP relativ zu dem Verlauf 900, wobei in der Fig. 9 über dem Verlauf 900 liegende Verläufe eine Ertragssteigerung und unter dem Verlauf 900 liegende Verläufe eine Ertragsminderung bedeuten.

Die Verläufe 900, 910 und 920 stellen Fälle dar, in denen die Radiusposition r/R an der die Belegung des Rotorblattes mit Wirbelgeneratoren endet sukzessive zunimmt, d.h. die Radiusposition r/R an der die Belegung des Rotorblattes mit Wirbelgeneratoren endet ist für den Verlauf 920 größer als für Verlauf 910 und für Verlauf 910 größer als für Verlauf 900. Außer der unterschiedlichen Belegung mit Wirbelgeneratoren gibt es zwischen den Windenergieanlagen, denen die Verläufe 900, 910 und 920 zu Grunde liegen, keine Unterschiede, das heißt, die Betriebsführung der Windenergieanlagen ist identisch. Es kann gesehen werden, dass die Jahresenergieproduktion unabhängig von dem Anteil ABM sinkt, also die Verlängerung der Belegung des Rotorblattes in Richtung der Rotorblattspitze bei sonstiger Beibehaltung der Betriebsführung eine Verschlechterung des AEP zur Folge hat.

In den Verläufen 912 und 922 sowie 914 und 924 wurde die Betriebsführung gegenüber den Verläufen 910 und 920 angepasst, wobei die Belegung der Wirbelgeneratoren wie in den Verläufen 910, 920 beibehalten wurde. Die Verläufe 912 und 922 bzw. 914 und 924 unterscheiden sich in den Blatteinstellwinkelverläufen, von denen Beispiele in Fig. 6 gezeigt sind.

Die Verläufe 912 und 922 haben beispielsweise einen gemeinsamen ersten Leistungsschwellwert, ab dem mit einer konstanten Blatteinstellwinkelrate gepitcht wird. Die Verläufe 914 und 924 haben wiederum eine angepasste Betriebsführung, beispielsweise einen veränderten, z.B. höheren, ersten Leistungsschwellwert und eine veränderte Blatteinstellwinkelrate. Auch können die minimalen Blatteinstellwinkel zwischen den Betriebsführungen, die den Verläufen 912 und 922 bzw. 914 und 924 zu Grunde liegen, unterschiedlich sein.

Es kann gesehen werden, dass für einen großen Bereich des Anteils ABM des schallreduzierten Betriebsmodus eine ideale Kombination aus Belegung mit Wirbelgeneratoren als auch der Betriebsführung existiert, gezeigt als Verlauf 914, der eine gegenüber dem Verlauf 900 deutliche Steigerung des Jahresenergieertrages liefert, so lange der Anteil ABM einen bestimmten Wert überschreitet. Eine weitere Verlängerung der Belegung der Wirbelgeneratoren, vergleiche Verlauf 924, würde dann jedoch zu einer Verschlechterung gegenüber dem Verlauf 914 führen. Es ist somit möglich, in Abhängigkeit der Situation eine optimale Belegung und Betriebsführung zu finden. Im Ergebnis kann das Belegen des Rotorblattes mit Wirbelgeneratoren bis zur Radiusposition r/R, das Anpassen des Blatteinstellwinkels und der Nennrotordrehzahl in Abhängigkeit eines standortspezifischen Schallleistungspegels selbst im Hybridbetrieb ermöglichen, einen Ertragsgewinn zu erzielen. Hierbei kann der Anteil ABM des schallreduzierten Betriebsmodus am Hybridbetrieb entscheidend sein (vgl. Schnittpunkte 915, 913, 925 und 923).

## Patentansprüche

1. Verfahren zum Auslegen und Betreiben einer Windenergieanlage (100) zum Erzeugen elektrischer Leistung aus Wind, wobei die Windenergieanlage (100) einen aerodynamischen Rotor (106) mit in ihrem Blatteinstellwinkel (γ) verstellbaren Rotorblättern (108) aufweist, wobei die Rotorblätter (108) an Radiuspositionen in Längsrichtung zwischen Rotorblattwurzel (114) und Rotorblattspitze (116) mit mehreren Wirbelgeneratoren (118) belegt werden, **dadurch gekennzeichnet, dass** eine Radiusposition (r/R) bis zu der die Belegung der Wirbelgeneratoren (118) in Längsrichtung des jeweiligen Rotorblattes (108) ausgehend von der Rotorblattwurzel in Richtung der Rotorblattspitze durchgeführt wird, in Abhängigkeit eines einzustellenden Schallleistungspegels an einem Standort der Windenergieanlage (100) bestimmt wird, so dass die Windenergieanlage Schallleistungspegelanforderungen am Standort der Windenergieanlage genügt.

2. Verfahren nach Anspruch 1, **dadurch gekennzeichnet, dass** zusätzlich der Blatteinstellwinkel (γ) der Rotorblätter (108) mit dem die Windenergieanlage (100) betrieben wird in Abhängigkeit des einzustellenden Schallleistungspegels am Standort der Windenergieanlage (100) bestimmt wird.

3. Verfahren nach Anspruch 2, **dadurch gekennzeichnet, dass** die Windenergieanlage (100) in einem schallreduziertem Betriebsmodus in Abhängigkeit des einzustellenden Schallleistungspegels am Standort der Windenergieanlage (100) mit einer gegenüber einem leistungsoptimierten Betriebsmodus reduzierten Nennrotordrehzahl betrieben wird.

4. Verfahren nach Anspruch 3, **dadurch gekennzeichnet, dass** die Bestimmung der Radiusposition (r/R), an der die Wirbelgeneratoren (118) enden und des Blatteinstellwinkels (γ) der Rotorblätter (108) mit denen die Windenergieanlage (100) betrieben wird, in Abhängigkeit des einzustellenden Schallleistungspegels derart erfolgt, dass eine aufgrund der reduzierten Nennrotordrehzahl zu erwartende Strömungsablösung verhindert und ein zu erwartender Leistungsverlust minimiert wird.

5. Verfahren nach Anspruch 3 oder 4, **dadurch gekennzeichnet, dass** die Belegung der Wirbelgeneratoren (118) in Längsrichtung des jeweiligen Rotorblattes (108) bis zu einer Radiusposition (r/R) durchgeführt wird, die in Abhängigkeit von der reduzierten Nennrotordrehzahl bestimmt wird.

6. Verfahren nach einem der Ansprüche 3 bis 5, **dadurch gekennzeichnet, dass** die Bestimmung der Radiusposition (r/R) bis zu der die Belegung der Wirbelgeneratoren (118) in Längsrichtung des jeweiligen Rotorblattes (108) durchgeführt wird in Abhängigkeit des einzustellenden Schallleistungspegels derart erfolgt, dass eine bei niedrigerem einzustellendem Schallleistungspegel notwendige Erhöhung des Blatteinstellwinkels (γ), die durch eine notwendige Reduzierung der Nennrotordrehzahl bedingt wird, minimiert wird.

7. Verfahren nach einem der Ansprüche 3 bis 6, **dadurch gekennzeichnet, dass** die Bestimmung der Radiusposition (r/R), an der die Wirbelgeneratoren (118) enden und des Blatteinstellwinkels (γ) der Rotorblätter (108) mit dem die Windenergieanlage (100) betrieben wird, in Abhängigkeit des einzustellenden Schallleistungspegels derart erfolgt, dass in einem Hybridbetrieb, enthaltend Betriebszeiträume im leistungsoptimierten Betriebsmodus und im schallreduzierten Betriebsmodus, Ertragsverluste im leistungsoptimierten Betriebsmodus durch Ertragsgewinne im schallreduzierten Betriebsmodus über einen bestimmten Zeitraum zumindest kompensiert werden.

8. Verfahren nach einem der vorstehenden Ansprüche, **dadurch gekennzeichnet, dass** die Einstellung des Blatteinstellwinkels (γ) in Abhängigkeit von der zur Belegung der Wirbelgeneratoren (118) bestimmten Radiusposition (r/R) durchgeführt wird.

9. Verfahren nach einem der vorstehenden Ansprüche, **dadurch gekennzeichnet, dass** die Belegung des Rotorblattes (108) mit den Wirbelgeneratoren (118) unter Berücksichtigung einer spezifischen Betriebsführung, insbesondere einer spezifischen Nennleistung mit der die Windenergieanlage (100) an einem Standort betrieben wird, durchgeführt wird.

10. Verfahren nach einem der vorstehenden Ansprüche, **dadurch gekennzeichnet, dass** mehrere Blatteinstellkennlinien (602, 604) hinterlegt sind und aus den hinterlegten Blatteinstellkennlinien (602, 604) in Abhängigkeit der für die Belegung der Wirbelgeneratoren (118) bestimmten Radiusposition (r/R) eine Blatteinstellkennlinie (604) ausgewählt und zum Einstellen des Blatteinstellwinkels (γ) verwendet wird.

11. Verfahren nach einem der vorstehenden Ansprüche, wobei die Radiusposition (r/R), bis zu der die Belegung der Wirbelgeneratoren (118) in Längsrichtung des jeweiligen Rotorblattes (108) durchgeführt wird, in Abhängigkeit eines Anteils eines schallreduzierten Betriebsmodus an dem Standort der Windenergieanlage (100) bestimmt wird.

12. Verfahren nach Anspruch 11, wobei zusätzlich eine Betriebsführung der Windenergieanlage, insbesondere eine Einstellung des Blatteinstellwinkels (γ), in Abhängigkeit des Anteils des schallreduzierten Betriebsmodus an dem Standort der Windenergieanlage (100) bestimmt wird.

13. Windenergieanlage (100) umfassend einen aerodynamischen Rotor (106) mit in ihrem Blatteinstellwinkel (γ) verstellbaren Rotorblättern (108), wobei der Rotor (106) in einem jeweiligen Betriebsmodus mit einer jeweiligen einstellbaren Nennrotordrehzahl betreibbar ist, sowie eine Regelung (200), **dadurch gekennzeichnet, dass** die Regelung (200) dazu eingerichtet ist, die Windenergieanlage (100) nach einem Verfahren gemäß wenigstens einem der Ansprüche 1 bis 12 zu betreiben.

## Claims

1. Method for designing and operating a wind power installation (100) for generating electrical power from wind, wherein the wind power installation (100) has an aerodynamic rotor (106) with rotor blades (108) of which the blade setting angle (γ) can be adjusted, wherein the rotor blades (108) are populated with a plurality of vortex generators (118) between the rotor blade root (114) and the rotor blade tip (116) at radius positions in the longitudinal direction, **characterized in that** a radius position (r/R) up to which the population with the vortex generators (118) in the longitudinal direction of the respective rotor blade (108) from the rotor blade root to the rotor blade tip is carried out is determined depending on a sound power level to be set at a site of the wind power installation (100) so that the wind power installation (100) meets requirements of the sound power level at the site of the wind power installation (100).

2. Method according to Claim 1, **characterized in that** the blade setting angle (γ) of the rotor blades (108) at which the wind power installation (100) is operated is additionally determined depending on the sound power level to be set at the site of the wind power installation (100).

3. Method according to Claim 2, **characterized in that** the wind power installation (100) is operated at a rated rotor speed that is reduced in comparison to a power-optimized operating mode in a sound-reduced operating mode depending on the sound power level to be set at the site of the wind power installation (100).

4. Method according to Claim 3, **characterized in that** determining the radius position (r/R) at which the vortex generators (118) end and the blade setting angle (γ) of the rotor blades (108) with which the wind power installation (100) is operated is performed depending on the sound power level to be set in such a way that flow separation to be expected on account of the reduced rated rotor speed is prevented and a power loss to be expected is minimized.

5. Method according to Claim 3 or 4, **characterized in that** the population with the vortex generators (118) is carried out in the longitudinal direction of the respective rotor blade (108) up to a radius position (r/R) which is determined depending on the reduced rated rotor speed.

6. Method according to one of Claims 3 to 5, **characterized in that** determining the radius position (r/R) up to which the population with the vortex generators (118) in the longitudinal direction of the respective rotor blade (108) is carried out is performed depending on the sound power level to be set in such a way that an increase in the blade setting angle (γ), which increase is necessary in the case of a relatively low sound power level to be set and is caused by a necessary reduction in the rated rotor speed, is minimized.

7. Method according to one of Claims 3 to 6, **characterized in that** determining the radius position (r/R) at which the vortex generators (118) end and the blade setting angle (γ) of the rotor blades (108) with which the wind power installation (100) is operated is performed depending on the sound power level to be set in such a way that, during hybrid operation containing operating time periods in the power-optimized operating mode and in the sound-reduced operating mode, production losses in the power-optimized operating mode are at least compensated for by production gains in the sound-reduced operating mode over a specific time period.

8. Method according to one of the preceding claims, **characterized in that** setting the blade setting angle (γ) is carried out depending on the radius position (r/R) determined for the population with the vortex generators (118).

9. Method according to one of the preceding claims, **characterized in that** the population of the rotor blade (108) with the vortex generators (118) is carried out taking into account specific operational management, in particular a specific rated power at which the wind power installation (100) at one site is operated.

10. Method according to one of the preceding claims, **characterized in that** a plurality of blade setting characteristic curves (602, 604) are stored and one blade setting characteristic curve (604) is selected from amongst the stored blade setting characteristic curves (602, 604) depending on the radius position (r/R) determined for the population with the vortex generators (118) and is used for setting the blade setting angle (γ).

11. Method according to one of the preceding claims, wherein the radius position (r/R) up to which the population with the vortex generators (118) in the longitudinal direction of the respective rotor blade (108) is carried out is determined depending on a proportion of a sound-reduced operating mode at the site of the wind power installation (100).

12. Method according to Claim 11, wherein operational management of the wind power installation, in particular setting the blade setting angle (γ), is additionally determined depending on the proportion of the sound-reduced operating mode at the site of the wind power installation (100).

13. Wind power installation (100) comprising an aerodynamic rotor (106) with rotor blades (108) of which the blade setting angle (γ) can be adjusted, wherein the rotor (106) can be operated in a respective operating mode at a respective settable rated rotor speed, and a control system (200), **characterized in that** the control system (200) is designed to operate the wind power installation (100) in line with a method according to at least one of Claims 1 to 12.

## Revendications

1. Procédé de conception et de fonctionnement d'une éolienne (100) pour la production d'énergie électrique à partir du vent, dans lequel l'éolienne (100) présente un rotor (106) aérodynamique avec des pales de rotor (108) réglables dans leur angle de réglage de pale (γ), dans lequel les pales de rotor (108) sont garnies, dans des positions de rayon dans le sens longitudinal entre l'emplanture de pale de rotor (114) et la pointe de pale de rotor (116), par plusieurs générateurs de tourbillon (118), **caractérisé en ce qu'**une position de rayon (r/R), jusqu'à laquelle la garniture des générateurs de tourbillon (118) est réalisée dans le sens longitudinal de la pale de rotor (108) respective à partir de l'emplanture de pale de rotor en direction de la pointe de pale de rotor, est déterminée en fonction d'un niveau de puissance sonore à régler à un endroit de l'éolienne (100) de sorte que l'éolienne satisfasse aux exigences du niveau de puissance sonore à l'endroit de l'éolienne.

2. Procédé selon la revendication 1, **caractérisé en ce qu'**en outre l'angle de réglage de pale (γ) des pales de rotor (108), avec lequel l'éolienne (100) fonctionne, est déterminé en fonction du niveau de puissance sonore à régler à l'endroit de l'éolienne (100).

3. Procédé selon la revendication 2, **caractérisé en ce que** l'éolienne (100) fonctionne dans un mode de fonctionnement à bruit réduit en fonction du niveau de puissance sonore à régler à l'endroit de l'éolienne (100) avec une vitesse de rotation de rotor nominale réduite par rapport à un mode de fonctionnement optimisé en puissance.

4. Procédé selon la revendication 3, **caractérisé en ce que** la détermination de la position de rayon (r/R), dans laquelle se terminent les générateurs de tourbillon (118) et de l'angle de réglage de pale (γ) des pales de rotor (108), avec lesquelles l'éolienne (100) fonctionne, est effectuée en fonction du niveau de puissance sonore à régler de telle manière qu'une interruption d'écoulement à attendre en raison de la vitesse de rotation de rotor nominale réduite soit empêchée et une perte de puissance à attendre soit minimisée.

5. Procédé selon la revendication 3 ou 4, **caractérisé en ce que** la garniture des générateurs de tourbillon (118) est réalisée dans le sens longitudinal de la pale de rotor (108) respective jusqu'à une position de rayon (r/R) qui est déterminée en fonction de la vitesse de rotation de rotor nominale réduite.

6. Procédé selon l'une quelconque des revendications 3 à 5, **caractérisé en ce que** la détermination de la position de rayon (r/R), jusqu'à laquelle la garniture des générateurs de tourbillon (118) est réalisée dans le sens longitudinal de la pale de rotor (108) respective, est effectuée en fonction du niveau de puissance sonore à régler de telle manière qu'une augmentation nécessaire, en cas de niveau de puissance sonore à régler plus bas, de l'angle de réglage de pale (γ), qui est conditionnée par une réduction nécessaire de la vitesse de rotation de rotor nominale, soit minimisée.

7. Procédé selon l'une quelconque des revendications 3 à 6, **caractérisé en ce que** la détermination de la position de rayon (r/R), dans laquelle les générateurs de tourbillon (118) se terminent, et de l'angle de réglage de pale (γ) des pales de rotor (108), avec lequel l'éolienne (100) fonctionne, est effectuée en fonction du niveau de puissance sonore à régler de telle manière que, dans un mode hybride contenant des périodes de fonctionnement en mode de fonctionnement optimisé en puissance et dans en mode de fonctionnement à bruit réduit, des pertes de rendement en mode de fonctionnement optimisé en puissance sont au moins compensées par des gains de rendement en mode de fonctionnement à bruit réduit sur une période déterminée.

8. Procédé selon l'une quelconque des revendications précédentes, **caractérisé en ce que** le réglage de l'angle de réglage de pale (γ) est réalisé en fonction de la position de rayon (r/R) déterminée pour la garniture des générateurs de tourbillon (118).

9. Procédé selon l'une quelconque des revendications précédentes, **caractérisé en ce que** la garniture de la pale de rotor (108) avec les générateurs de tourbillon (118) est réalisée en tenant compte d'une exploitation spécifique, en particulier d'une puissance nominale spécifique, avec laquelle l'éolienne (100) fonctionne à un endroit.

10. Procédé selon l'une quelconque des revendications précédentes, **caractérisé en ce que** plusieurs lignes caractéristiques de réglage de pale (602, 604) sont enregistrées et une ligne caractéristique de réglage de pale (604) est sélectionnée parmi les lignes caractéristiques de réglage de pale (602, 604) enregistrées en fonction de la position de rayon (r/R) déterminée pour la garniture des générateurs de tourbillon (118) et est utilisée pour le réglage de l'angle de réglage de pale (γ).

11. Procédé selon l'une quelconque des revendications précédentes, dans lequel la position de rayon (r/R), jusqu'à laquelle la garniture des générateurs de tourbillon (118) est réalisée dans le sens longitudinal de la pale de rotor (108) respective, est déterminée en fonction d'une part d'un mode de fonctionnement à bruit réduit à l'endroit de l'éolienne (100).

12. Procédé selon la revendication 11, dans lequel, en outre, une exploitation de l'éolienne, en particulier un réglage de l'angle de réglage de pale (γ), est déterminée en fonction de la part du mode de fonctionnement à bruit réduit à l'endroit de l'éolienne (100).

13. Eolienne (100) comprenant un rotor (106) aérodynamique avec des pales de rotor (108) réglables dans leur angle de réglage de pale (γ), dans laquelle le rotor (106) peut fonctionner dans un mode de fonctionnement respectif avec une vitesse de rotation de rotor nominale réglable respective, ainsi qu'une régulation (200), **caractérisée en ce que** la régulation (200) est conçue afin de faire fonctionner l'éolienne (100) selon un procédé selon au moins l'une quelconque des revendications 1 à 12.
